# EUROPÄISCHE PATENTSCHRIFT

(11) **EP 3 626 521 B1**
(45) Veröffentlichungstag und Bekanntmachung des Hinweises auf die Patenterteilung: **28.04.2021**
(21) Anmeldenummer: 19196566.4
(22) Anmeldetag: 10.09.2019
(51) Int. Cl.: B60N 2/38, B60N 2/50, B60N 2/16, B60N 2/58

(54) **ABDECKUNGSVORRICHTUNG FÜR FAHRZEUGSITZE**
COVER DEVICE FOR VEHICLE SEATS
DISPOSITIF DE COUVERTURE POUR SIÈGES DE VÉHICULE

(30) Priorität: 19.09.2018 DE 102018123004; 21.08.2019 DE 102019122533; 21.08.2019 DE 102019122528
(43) Veröffentlichungstag der Anmeldung: 25.03.2020
(73) Patentinhaber: GRAMMER AG, 92289 Ursensollen (DE)
(72) Erfinder: Ott, Richard, 92245 Kümmersbruck (DE)
(74) Vertreter: Hannke, Christian

(56) Entgegenhaltungen:
- DE-A1- 19 845 011
- DE-U1- 29 713 709
- US-A1- 2016 176 326

## Beschreibung

Die Erfindung betrifft eine Abdeckungsvorrichtung für einen Sitzunterbau eines Fahrzeugsitzes, wobei die Abdeckungsvorrichtung den Sitzunterbei seitlich umgibt. Ferner betrifft die Erfindung einen Fahrzeugsitz, umfassend ein Sitzteil, eine Rückenlehne, und einen Sitzunterbau, welcher entlang einer Höhenachse Z unter dem Sitzteil angeordnet ist, wobei der Sitzunterbau seitlich von einer Abdeckungsvorrichtung vollständig umschlossen ist.

Fahrzeugsitze sind insbesondere in Nutzfahrzeugen derart ausgebildet, dass sie sowohl in vertikaler Richtung als auch gegebenenfalls in horizontaler Richtung schwingbar angeordnet sind. Dies ist zur Dämpfung der den Fahrzeugsitz benutzenden Person bei unebenem Untergrund notwendig. Hierfür weisen derartige Nutzfahrzeugsitze häufig unterhalb des Sitzteiles einen Sitzunterbau auf, welcher ein Trägergestell in Form eines Scherengestells umfasst. Gegebenenfalls sind (Luft-) feder- und/oder Dämpfungselemente vorgesehen, um die Scherenarme in ihrer Auf- und Abwärtsbewegung zu dämpfen bzw. abzufedern. Das Sitzteil wird sich demnach gegenüber einem Karosserieboden von beispielsweise einer Nutzfahrzeugkabine ständig in der Höhenrichtung in seinen Abstand verändern. Dies passiert nicht nur während der Fahrt, sondern auch im Stillstand bei anfänglicher Einstellung der Sitzhöhe eines Fahrers bzw. Beifahrers.

Der Sitzunterbau wird üblicherweise mittels einer Abdeckungsvorrichtung abgedeckt. Dies erfolgt zum einen aus optischen Gründen, zum anderen sollen die Elemente des Sitzunterbaus vor Verschmutzung beziehungsweise vor Beschädigungen geschützt werden. Darüber hinaus soll verhindert werden, dass der Nutzer sich eventuell an den Elementen des Sitzunterbaus verletzen könnte.

Als Abdeckvorrichtungen sind bisher Faltenbälge verwendet worden, die man aus elastischem, vorzugsweise gummiartigem Material herstellt, welche sich nach oben und unten zusammen und wieder auseinanderfalten, um die Höhenbewegung bei einem Schwingungszustand des Fahrzeugsitzes mitzumachen und somit eine dauerhafte Abdeckung nach außen hin von den Scherenarmen und gegebenenfalls Luftfeder- und Dämpferelemente zu ermöglichen. Derartige Faltenbälge weisen jedoch oft nicht eine entsprechende Haltbarkeit beziehungswese Stabilität auf.

DE 198 45 011 A1 beschreibt eine Seitenverkleidung für ein Höhenverstellbaren Fahrzeugsitz, wobei diese ein einem Hup des Fahrzeugsitzes folgendes elastisches Element aufweist. Um die Seitenverkleidung einfach montierbar zu machen und in einem gefälligen Erscheinungsbild erscheinen zu lassen, ist das elastische Element zwischen zwei nicht elastischen festen Halterungsteilen ausgebildet, von denen eines fahrzeugbodennah und höhenfest am Sitz gestellt und das andere am höhenverstellbaren Teil des Sitzes anordbar ist.

Aufgabe der vorliegenden Erfindung ist es, eine Abdeckungsvorrichtung bereitzustellen, welche die genannten Probleme löst. Ferner ist es Aufgabe der Erfindung einen Fahrzeugsitz bereitzustellen, welcher die genannten Probleme löst.

Die Aufgabe wird durch die Gegenstände der unabhängigen Ansprüche 1 und 9 gelöst. Vorteilhafte Ausgestaltungen sind den Unteransprüchen zu entnehmen.

Ein wesentlicher Punkt der Erfindung liegt darin, eine Abdeckungsvorrichtung für einen Sitzunterbau eines Fahrzeugsitzes bereitzustellen, wobei die Abdeckungsvorrichtung den Sitzunterbau seitlich umgibt, wobei die Abdeckungsvorrichtung zumindest zwei in sich steife rahmenartige Elemente umfasst, welche entlang einer Höhenachse Z teleskopartig ineinander verlagerbar sind, wobei zumindest eine Führungsvorrichtung vorgesehen ist, mittels welcher die rahmenartigen Elemente bei einer Verlagerung entlang einer Höhenachse Z geführt werden, wobei zumindest ein elastisches Element vorgesehen ist, mittels welchem die Abdeckungsvorrichtung zu einem vorgegebenen Ausgangszustand rückstellbar ist, wobei das elastische Element mit zumindest einem rahmenartigen Element verbunden ist.

Durch die in sich steifen rahmenartigen Elemente ist die Abdeckungsvorrichtung wesentlich stabiler als die bisher verwendeten Faltenbälge. Mechanische Einflüsse von außen können durch derartige in sich steife, also nicht elastische, rahmenartige Elemente effektiv verhindert werden. Ferner verhindern derart stabile Elemente effektiv ein Verletzungsrisiko des Nutzers durch den Sitzunterbau. Schließlich können die rahmenartigen Elemente besser mit optischen Elementen wie Lackierungen versehen werden, wodurch sich das optische Erscheinungsbild des gesamten Fahrzeugsitzes verbessert.

Die Abdeckungsvorrichtung sowie der Fahrzeugsitz erstrecken sich entlang einer Höhenachse Z einer Breitenachse Y und einer Tiefenachse X.

Die Führungsvorrichtung erlaubt lediglich eine Verlagerung der rahmenartigen Elemente zueinander entlang der Höhenachse Z. Eine Verlagerung relativ zueinander entlang der Breitenachse Y und der Tiefenachse X wird durch die Führung in der Führungsvorrichtung unterbunden. Hierdurch wird ein Verkanten der rahmenartigen Elemente verhindert, wodurch eine leichtgängige Verlagerung entlang der Höhenachse Z ermöglicht wird.

Die Abdeckungsvorrichtung umfasst erfindungsgemäß zumindest zwei in sich steife rahmenartige Elemente. Diese rahmenartigen Elemente haben vorzugsweise eine rechteckige oder quadratische Grundfläche. Es wäre jedoch auch denkbar, dass die rahmenartigen Elemente eine Grundfläche in Form eines beliebigen Polygons einer Ellipse oder eines Kreises aufweisen. Der Ausdruck "teleskopartig ineinander verlagerbar" ist dahingehend zu verstehen, dass die rahmenartigen Elemente unterschiedliche Ausdehnungen, beispielsweise Seitenlängen, Durchmesser etc. aufweisen, so dass ein zweites rahmenartiges Element innerhalb eines ersten rahmenartigen Elements angeordnet werden kann. Ein vorteilhaftes drittes rahmenartiges Element wäre dann innerhalb des zweiten rahmenartigen Elements anordenbar.

Vorteilhafterweise sind die Höhen entlang der Höhenachse Z der rahmenartigen Elemente für jedes der rahmenartigen Elemente gleich. Alternativ können die Höhen entlang der Höhenachse Z der rahmenartigen Elemente für jedes der rahmenartigen Elemente unterschiedlich sein.

Der Sitzunterbau ist vorzugsweise an einem Sitzteil des Fahrzeugsitzes angeordnet. Ferner ist bevorzugt, dass der Sitzunterbau direkt an der Fahrzeugkarosserie oder an einem Fußelement angeordnet ist. Das Fußelement ist vorteilhafterweise an der Fahrzeugkarosserie angeordnet. Dies kann eine feste Verbindung oder auch ein Schienensystem sein, welches eine Verlagerung des Fahrzeugsitzes entlang des Schienensystems erlaubt.

Die Abdeckungsvorrichtung erstreckt sich vorteilhafterweise ausgehend von einer Unterseite des Sitzteils bis zu der Oberfläche der Fahrzeugkarosserie oder bis zu dem Fußteil. Ist ein Fußteil vorgesehen, kann dieses vorteilhafterweise innerhalb der Abdeckungsvorrichtung angeordnet werden. Alternativ kann die Abdeckvorrichtung auf dem Fußteil beziehungsweise entlang der Höhenachse Z über dem Fußteil angeordnet sein. Die Höhe der Abdeckungsvorrichtung entspricht demnach vorteilhafterweise dem Abstand zwischen dem Sitzteil und der Oberfläche der Fahrzeugkarosserie. Alternativ entspricht die Höhe der Abdeckungsvorrichtung dem Abstand zwischen dem Sitzteil und dem Fußteil.

Durch die erfindungsgemäße Ausgestaltung der Abdeckungsvorrichtung in Form der teleskopartigen Ausgestaltung ist die Höhe der Abdeckungsvorrichtung variabel.

Die erfindungsgemäße Rückstellung in den Ausgangszustand kann eine Rückstellung zu einer Ausgangshöhe der Abdeckvorrichtung bedeuten. Alternativ oder kumulativ kann der Ausgangszustand die Anordnung der rahmenartigen Elemente zueinander umfassen.

Die Ausgangshöhe der Abdeckvorrichtung bestimmt sich vorzugsweise aus dem Abstand zwischen dem Sitzteil und der Fahrzeugkarosserie oder zwischen dem Sitzteil und dem Fußteil. Dabei ist es von Vorteil, wenn dieser Abstand vorzugsweise durch eine Sitzhöheneinstellvorrichtung eingestellt werden kann. Vorzugsweise ist die Ausgangshöhe der Abdeckvorrichtung bestimmt durch den Abstand zwischen dem Sitzteil und der Fahrzeugkarosserie oder zwischen dem Sitzteil und dem Fußteil in einem Zustand, in dem eine Person sich in dem Sitz befindet.

Wirken nun vertikale Kräfte auf den Sitz, welche beispielsweise durch vertikale Schwingungen während der Fahrt erzeugt werden, variiert der Abstand zwischen dem Sitzteil und der Fahrzeugkarosserie beziehungsweise dem Fußteil. Die Feder- und/oder Dämpfungseinrichtung dient dazu, das Sitzteil wieder in eine entsprechende vertikale Ausgangslage überzuführen. Vorteilhafterweise nimmt in dieser der Feder- und/oder Dämpfungseinrichtung vorgegebenen vertikalen Ausgangslage des Sitzteils die Abdeckvorrichtung ihre Ausgangshöhe ein.

Die erfindungsgemäße Abdeckungsvorrichtung kann vorteilhafterweise in dessen Höhe variiert werden und passt sich demnach dem Abstand zwischen dem Sitzteil und der Oberfläche der Fahrzeugkarosserie beziehungsweise dem Fußteil an. Eine Änderung der Höhe der Abdeckungsvorrichtung erfolgt vorzugsweise durch eine Verlagerung der rahmenartigen Elemente entlang der Höhenachse Z. Eine Verringerung der Höhe der Abdeckungsvorrichtung erfolgt bevorzugt durch ein Zusammen-, beziehungsweise ein Ineinanderschieben der rahmenartigen Elemente. Eine Vergrößerung der Höhe der Abdeckungsvorrichtung erfolgt bevorzugt durch ein Auseinanderziehen der rahmenartigen Elemente.

Durch die Kraftwirkung des elastischen Elements, aufgrund von dessen Kompression oder Dehnung, kann die Abdeckungsvorrichtung wieder vorteilhafterweise seinem Ausgangszustand, beziehungsweise der Ausgangshöhe zugeführt werden. Ferner kann durch die Kraftwirkung des elastischen Elements eine ursprüngliche Anordnung der rahmenartigen Elemente relativ zueinander zurückstellen.

Nach einer bevorzugten Ausführungsform umfasst die Abdeckungsvorrichtung zumindest drei in sich steife rahmenartige Elemente. Nach einer weiteren bevorzugten Ausführungsform umfasst die Abdeckungsvorrichtung drei in sich steife rahmenartige Elemente.

Vorzugsweise umfasst die Abdeckungsvorrichtung ein entlang der Höhenachse Z oberstes und ein entlang der Höhenachse Z unterstes rahmenartiges Element. Vorteilhafterweise ist das oberste rahmenartige Element an dem Sitzteil anliegend oder anordenbar. Es wäre auch denkbar, wenn das oberste rahmenartige Element an dem Sitzteil fixiert ist. Das oberste rahmenartige Element würde demnach den Bewegungen des Sitzteils folgen. Vorteilhafterweise ist das unterste rahmenartige Element an dem Fußteil beziehungsweise an der Oberfläche der Fahrzeugkarosserie anliegend. Es wäre auch denkbar, wenn das unterste rahmenartige Element an einem Fußteil des Fahrzeugsitzes oder an einer Oberfläche der Fahrzeugkarosserie anliegend oder anordenbar ist. Es wäre auch denkbar, wenn das unterste rahmenartige Element an dem Fußteil des Fahrzeugsitzes oder an einer Oberfläche der Fahrzeugkarosserie fixiert ist. Das unterste rahmenartige Element würde demnach den Bewegungen des Fußteils des Fahrzeugsitzes oder der Oberfläche der Fahrzeugkarosserie folgen. Durch eine Änderung des Abstands zwischen dem Sitzteil und dem Fußteil beziehungsweise der Oberfläche der Fahrzeugkarosserie wird somit auch der Abstand zwischen dem obersten und dem untersten rahmenartigen Element entsprechend geändert.

Vorteilhafterweise ist ein oberer Rand des mittleren rahmenartigen Elements derart innerhalb des obersten rahmenartigen Elements angeordnet, dass dieser in einem mittleren Bereich, vorteilhafterweise im Wesentlichen mittig, entlang der Höhe des obersten Elements angeordnet ist. Dies hat den Vorteil, dass sich das mittlere Element entlang der Höhenachse Z in beiden Richtungen noch relativ zu dem obersten Element verlagern lässt. Mit anderen Worten ist noch ein Restverlagerungsweg in beide Richtungen vorhanden. Ebenso ist es vorteilhaft, wenn ein unterer Rand des mittleren rahmenartigen Elements derart innerhalb des untersten rahmenartigen Elements angeordnet ist, dass dieser in einem mittleren Bereich, vorteilhafterweise im Wesentlichen mittig, entlang der Höhe des untersten Elements angeordnet ist. Dies hat ebenso den Vorteil, dass sich das mittlere Element entlang der Höhenachse Z in beiden Richtungen noch relativ zu dem untersten Element verlagern lässt. Der mittlere Bereich wird vorteilhafterweise durch die Höheneinstellung des Fahrzeugsitzes definiert.

Natürlich kann die beschriebene Funktionalität auch analog auf Abdeckungsvorrichtungen mit mehr als drei rahmenartigen Elementen angewendet werden. Hier wäre wiederum ein oberstes und ein unterstes rahmenartiges Element vorgesehen. Ferner wären hier mehrere mittlere Elemente vorgesehen. welche mit zumindest einem elastischen Element verbunden sind. Es wäre denkbar, dass für jedes mittlere rahmenartige Element ein elastisches Element vorgesehen ist. Es wäre jedoch auch möglich, dass mehrere mittlere rahmenartige Elemente mit einem elastischen Element verbunden sind. Auch bei den im Folgenden beschriebenen Ausführungsformen ist die Funktionalität nicht auf drei rahmenartige Elemente beschränkt. Die Ausführungsformen können ebenso analog auf Abdeckungsvorrichtungen mit mehr als drei rahmenartigen Elementen analog angewandt werden.

Nach einer bevorzugten Ausführungsform ist das zumindest eine elastische Element mittels zumindest einer form- und/oder kraftschlüssigen Verbindung an dem mittleren rahmenartigen Element angeordnet. Vorteilhafterweise ist das zumindest eine elastische Element mittels einer Klemm- und/oder Schnapp- und oder Klippverbindung an dem mittleren rahmenartigen Element angeordnet. Bevorzugt weist das mittlere rahmenartige Element zumindest eine Aufnahme auf, in welcher ein Verbindungselement des elastischen Elements aufgenommen ist. Vorteilhafterweise ist das Verbindungselement zapfenförmig ausgebildet. Das zapfenförmige Element kann vorteilhafterweise eine umlaufende Nut aufweisen, in welche ein entsprechender Vorsprung der Aufnahme eingreift. Hierdurch wird eine stabile/feste Verbindung zwischen dem Verbindungselement und der Aufnahme gewährleistet. Vorteilhafterweise bestehen das Verbindungselement und das elastische Element aus dem gleichen Material. Es wäre jedoch auch denkbar, dass die beiden Element aus unterschiedlichen Materielaien bestehen.

Durch die vorteilhafte Verbindung des zumindest einen elastischen Elements mit dem mittleren rahmenartigen Element kann die Anordnung des mittleren Elements relativ zu den obersten und untersten rahmenartigen Element derart zurückgestellt werden, das dessen oberer und unterer Rand sich in den entsprechenden mittleren Bereichen des obersten beziehungsweise untersten rahmenartigen Elements befindet.

Nach einer weiteren bevorzugten Ausführungsform ist das zumindest eine elastische Element zumindest abschnittsweise plattenartig ausgebildet. Vorteilhafterweise ist das gesamte elastische Element plattenartig ausgebildet. Vorzugsweise ist das elastische Element an einer Innenseite der Abdeckvorrichtung beziehungsweise der rahmenartigen Elemente, welche dem Sitzunterbau zugewandt ist, angeordnet. Nach einer weiteren bevorzugten Ausführungsform sind zumindest zwei elastische Elemente vorgesehen. Vorteilhafterweise sind je zwei elastische Elemente an sich gegenüberliegenden Innenseiten der Abdeckungsvorrichtung angeordnet. Bei einer vorteilhaften Ausgestaltung der Abdeckungsvorrichtung mit einer elliptischen oder kreisförmigen Grundfläche ist es bevorzugt, wenn je zwei elastische Elemente sich diametral gegenüberliegend angeordnet sind.

Nach einer weiteren bevorzugten Ausführungsform weist das zumindest eine elastische Element eine Ausdehnung entlang der Höhenachse Z auf, so dass ein unterer Rand des elastischen Elements ein Fußteil oder eine Oberfläche der Karosserie kontaktieren kann und/oder ein oberer Rand des elastischen Elements das Sitzteil kontaktieren kann. Vorteilhafterweise ist eine Verformungskraft entlang der Höhenachse Z durch das Sitzteil und/oder das Fußteil des Fahrzeugsitzes beziehungsweise der Oberfläche der Fahrzeugkarosserie in das elastische Element einbringbar. Eine solche Verformungskraft ist vorteilhafterweise unmittelbar durch einen Kraft- oder Formschluss zwischen dem elastischen Element und dem Sitzteil beziehungsweise dem Fußteil beziehungsweise der Oberfläche der Fahrzeugkarosserie einbringbar. Ein Formschluss kann beispielsweise ein Steckverbindung eine Schraubverbindung eine Schnappverbindung eine Klemmverbindung oder Ähnliches sein. Eine solche Verformungskraft führt zu einer Kompression oder einer Dehnung des elastischen Elements.

Bei einer Verringerung der Ausgangshöhe durch einen Krafteintrag verursacht durch Schwingungen des Sitzes des Fahrzeuges werden die rahmenartigen Elemente entsprechend ineinander verschoben oder auseinandergezogen. Ferner wird durch den Kraft- und/oder Formschluss des elastischen Elements mit dem Fußteil/der Oberfläche der Karosserie und/oder dem Sitzteil dieses komprimiert oder gedehnt. Durch diese Komprimierung oder Dehnung wird vorteilhafterweise das mittlere Element, welches mit diesem verbunden ist, entsprechend nach unten oder oben verlagert, so dass die relative Lage des mittleren Elements zu dem obersten und dem untersten angepasst wird. Durch das bevorzugte Vorsehen von je zwei elastischen Elementen an einer gegenüberliegenden/diametralen Innenseite der rahmenartigen Element wird ein Verkannten des mittleren rahmenartigen Elements bei einer entsprechenden Verlagerung verhindert.

Nach einer weiteren bevorzugten Ausführungsform ist das zumindest eine elastische Element mit dem entlang der Höhenachse Z obersten rahmenartigen Element verbunden. Nach einer weiteren vorteilhaften Ausführungsform ist das elastische Element mit dem entlang der Höhenachse Z untersten rahmenartigen Element verbunden. Nach einer weiteren vorteilhaften Ausführungsform ist das zumindest eine elastische Element mit dem entlang der Höhenachse Z obersten rahmenartigen Element und dem entlang der Höhenachse Z untersten rahmenartigen Element verbunden. Nach einer weiteren vorteilhaften Ausführungsform ist das zumindest eine elastische Element mit dem entlang der Höhenachse Z obersten rahmenartigen Element, dem entlang der Höhenachse Z untersten rahmenartigen Element und dem mittleren rahmenartigen Element verbunden. Die Verbindung zwischen dem zumindest einen elastischen Element und dem untersten und/oder obersten Element ist vorzugsweise eine formschlüssige Verbindung, beispielsweise eine Schraubverbindung eine Nietenverbindung eine Klemmverbindung eine Steckverbindung oder eine Clipsverbindung. Ferner kann die Verbindung mittels Verbindungstiften, welche in entsprechenden Bohrungen der Elemente eingebracht sind, ausgebildet sein. Dies Verbindungsstifte können derart in die Bohrungen eingebracht beziehungsweise eingeklemmt werden, dass diese wieder lösbar sind.

Nach einer weiteren bevorzugten Ausführungsform weist das zumindest eine elastische Element einen ersten Abschnitt auf, der plattenartig ausgebildet ist. Vorzugsweise weist das elastische Element einen zweiten Abschnitt auf, welcher einen Z-förmigen Querschnitt aufweist und entlang der Höhenachse Z oberhalb des ersten Abschnitts angeordnet ist. Vorteilhafterweise geht der zweite Abschnitt in den ersten über. Vorzugsweise weist das zumindest eine elastische Element einen dritten Abschnitt auf, welcher einen Z-förmigen Querschnitt aufweist und entlang der Höhenachse Z unterhalb des ersten Abschnitts angeordnet ist. Vorteilhafterweise geht der dritte Abschnitt in den ersten Abschnitt über. Bevorzugt ist das zumindest eine elastische Element mittels des zweiten Abschnitts mit dem obersten rahmenartigen Element verbunden. Vorzugsweise ist das elastische Element mittels des dritten Abschnitts mit dem untersten rahmenartigen Element verbunden. Die bevorzugte formschlüssige Verbindung zwischen dem elastischen Element und dem untersten beziehungsweise obersten rahmenartigen Element ist demnach dem oberen beziehungsweise unteren Abschnitt des elastischen Elements vorgesehen.

Auch bei dieser Ausführungsform werden bei einer Verringerung der Ausgangshöhe durch einen Krafteintrag, welcher durch Schwingungen des Sitzes des Fahrzeuges verursacht wird, die rahmenartigen Elemente entsprechend ineinander verschoben oder auseinandergezogen. Durch die Verbindung des elastischen Elements mit den rahmenartigen Elementen wird dieses entsprechend komprimiert oder gedehnt. Hierdurch kann eine entsprechende Ausgangslage in Form von einer Ausgangshöhe der Abdeckungsvorrichtung und/oder einer Anordnung der rahmenartigen Elemente relativ zueinander wieder hergestellt werden. Durch das bevorzugte Vorsehen von je zwei elastischen Elementen an einer gegenüberliegenden/diametralen Innenseite der rahmenartigen Elemente wird ein Verkannten des mittleren rahmenartigen Elements bei einer entsprechenden Verlagerung verhindert.

Nach einer weiteren bevorzugten Ausführungsform umfasst die Führungsvorrichtung eine Nut oder eine Schiene, welche an einem rahmenartigen Element angeordnet ist. Bevorzugt umfasst die Führungsvorrichtung ein Führungselement, welches an einem rahmenartigen Element angeordnet ist. Vorteilhafterweise ist das Führungselement in der Nut oder an der Schiene geführt. Dabei ist es von Vorteil, dass das Führungselement an einem rahmenartigen Element angeordnet ist, welches entlang der Höhenachse Z unter dem rahmenartigen Element mit der Nut oder der Schiene angeordnet ist. Vorteilhafterweise weist das oberste rahmenartige Element lediglich eine Nut oder eine Schiene auf. Bevorzugt weist das unterste rahmenartige Element lediglich ein Führungselement auf. Bevorzugt weisen die rahmenartigen Elemente, welche zwischen dem obersten und dem untersten rahmenartigen Elementen angeordnet sind, sowohl eine Nut oder Schiene als auch ein Führungselement auf. Durch eine solche Ausgestaltung sind alle übereinanderliegenden rahmenartigen Elemente mittels der Führungsvorrichtung entlang der Höhenachse Z geführt. Das Führungselement kann beispielsweise ein Nutenstein oder ein Gleitelement sein, welches in der Nut oder an der Schiene gleiten angeordnet ist.

Nach einer bevorzugten Ausführungsform besteht das elastische Element aus einem Elastomer.

Die Aufgabe wird weiterhin durch einen Fahrzeugsitz umfassend ein Sitzteil, eine Rückenlehne, und einen Sitzunterbau, welcher entlang einer Höhenachse Z unter dem Sitzteil angeordnet ist, wobei der Sitzunterbau seitlich von einer Abdeckungsvorrichtung vollständig umschlossen ist, gelöst. Dabei umfasst die Abdeckungsvorrichtung zumindest zwei in sich steife, rahmenartige Elemente, welche entlang einer Höhenachse Z teleskopartig ineinander verlagerbar sind, wobei zumindest eine Führungsvorrichtung vorgesehen ist, mittels welcher die rahmenartigen Elemente bei einer Verlagerung entlang einer Höhenachse Z geführt werden, wobei zumindest ein elastisches Element vorgesehen ist, mittels welcher die Abdeckungsvorrichtung zu einem vorgegebenen Ausgangszustand rückstellbar ist, wobei das elastische Element mit zumindest einem rahmenartigen Element verbunden ist.

Der Fahrzeugsitz kann dabei mit allen bereits obig im Rahmen der Vorrichtung beschriebenen Merkmalen einzeln oder in Kombination miteinander ausgestattet sein und umgekehrt.

Nach einer bevorzugten Ausführungsform umfasst der Sitzunterbau ein Tragegestell, mittels welchem das Sitzteil mit einem Fußteil und/oder einer Fahrzeugkarosserie verbunden ist. Vorzugsweise ist ein derartiges Fußteil seinerseits mit der Fahrzeugkarosserie verbunden. Vorteilhafterweise umfasst der Sitzunterbau eine Feder- und/oder Dämpfungsvorrichtung für Schwingungen in vertikaler Richtung, also entlang der Höhenachse Z. Bevorzugt umfasst der Sitzunterbau eine Feder- und/oder Dämpfungsvorrichtung für Schwingungen in horizontaler Richtung, also entlang der Breitenrichtung Y und/oder der Tiefenrichtung X.

Nach einer bevorzugten Ausführungsform des Fahrzeugsitzes umfasst die Abdeckungsvorrichtung zumindest drei in sich steife rahmenartige Elemente. Vorzugsweise umfasst die Abdeckungsvorrichtung drei in sich steife rahmenartige Elemente. Bevorzugt ist das zumindest eine elastische Element mit einem mittleren rahmenartigen Element verbunden. Dabei ist es von Vorteil, dass die Abdeckungsvorrichtung ein entlang der Höhenachse Z oberstes und ein entlang der Höhenachse Z unterstes rahmenartiges Element umfasst. Das oberste rahmenartige Element ist vorzugsweise an dem Sitzteil angeordnet. Das unterste rahmenartige Element ist bevorzugt an einem Fußteil des Fahrzeugsitzes oder an einer Oberfläche der Fahrzeugkarosserie angeordnet.

Nach einer bevorzugten Ausführungsform des Fahrzeugsitzes ist das zumindest eine elastische Element zumindest abschnittsweise plattenartig ausgebildet. Vorzugsweise ist das elastische Element an einer Innenseite der Abdeckungsvorrichtung beziehungsweise der rahmenartigen Elemente, welche dem Sitzunterbau zugewandt ist, angeordnet. Dabei ist es von Vorteil, dass die Abdeckungsvorrichtung zumindest zwei elastische Elemente aufweist. Vorzugsweise sind je zwei elastische Elemente an sich gegenüberliegenden Innenseiten der Abdeckungsvorrichtung beziehungsweise diametral angeordnet.

Nach einer bevorzugten Ausführungsform des Fahrzeugsitzes weist das zumindest eine elastische Element eine Ausdehnung entlang der Höhenachse Z auf, so dass ein unterer Rand des elastischen Elements das Fußteil oder eine Oberfläche der Fahrzeugkarosserie kontaktiert und/oder ein oberer Rand des zumindest einen elastischen Elements das Sitzteil kontaktiert. Bevorzugt ist eine Verformungskraft entlang der Höhenachse Z durch das Sitzteil und/oder das Fußteil des Fahrzeugsitzes beziehungsweise der Oberfläche der Fahrzeugkarosserie in das elastische Element einbringbar ist. Bevorzugt wird durch das Einbringen der Verformungskraft das elastische Element komprimiert oder gedehnt. Vorteilhafterweise ist die Verformungskraft unmittelbar durch einen Kraft- oder Formschluss einbringbar.

Nach einer bevorzugten Ausführungsform des Fahrzeugsitzes ist das zumindest eine elastische Element mit dem entlang der Höhenachse Z obersten rahmenartigen Element verbunden. Nach einer weiteren bevorzugten Ausführungsform ist das zumindest eine elastische Element mit dem entlang der Höhenachse Z untersten rahmenartigen Element verbunden. Nach einer weiteren bevorzugten Ausführungsform ist das zumindest eine elastische Element mit dem entlang der Höhenachse Z obersten rahmenartigen Element und dem entlang der Höhenachse Z untersten rahmenartigen Element verbunden. Nach einer weiteren bevorzugten Ausführungsform ist das zumindest eine elastische Element mit dem entlang der Höhenachse Z obersten rahmenartigen Element, dem entlang der Höhenachse Z untersten rahmenartigen Element verbunden und dem mittleren rahmenartigen Element verbunden.

Nach einer vorteilhaften Ausführungsform des Fahrzeugsitzes weist das zumindest eine elastische Element einen ersten Abschnitt auf, der plattenartig ausgebildet ist. Vorzugsweise weist das elastische Element einen zweiten Abschnitt auf, welcher einen Z-förmigen Querschnitt aufweist und entlang der Höhenachse Z oberhalb des ersten A-schnitts angeordnet ist und in diesen übergeht. Bevorzugt weist das elastische Element einen dritten Abschnitt auf, welcher einen Z-förmigen Querschnitt aufweist und entlang der Höhenachse Z unterhalb des ersten Abschnitts angeordnet ist und in diesen übergeht. Vorteilhafterweise ist das elastische Element mittels des zweiten Abschnitts mit dem obersten rahmenartigen Element verbunden. Bevorzugt ist das elastische Element mittels des dritten Abschnitts mit dem untersten rahmenartigen Element verbunden.

Nach einer vorteilhaften Ausführungsform des Fahrzeugsitzes umfasst die Führungsvorrichtung eine Gleitaufnahme in Form einer Nut oder einer Schiene, welche an einem rahmenartigen Element angeordnet ist. Vorzugsweise umfasst die Führungsvorrichtung ein Führungselement, welches an einem rahmenartigen Element angeordnet ist. Bevorzugt ist ein Führungselement in oder an der Gleitaufnahme in Form einer Nut oder einer Schiene geführt. Vorzugsweise ist das Führungselement an einem rahmenartigen Element angeordnet, welches entlang der Höhenachse Z unter dem rahmenartigen Element mit der Gleitaufnahme angeordnet ist.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine isometrische Ansicht des Fahrzeugsitzes nach einer Ausführungsform;
- Fig. 2: eine Vorderansicht des Fahrzeugsitzes nach einer Ausführungsform;
- Fig. 3: eine isometrische Ansicht der Abdeckungsvorrichtung nach einer Ausführungsform;
- Fig. 4: eine Seitenansicht der Abdeckungsvorrichtung nach einer Ausführungsform;
- Fig. 4a: eine Schnittansicht der Abdeckungsvorrichtung nach einer Ausführungsform;
- Fig. 5: eine Seitenansicht der Abdeckungsvorrichtung nach einer Ausführungsform;
- Fig. 5a: eine Schnittansicht der Abdeckungsvorrichtung nach einer Ausführungsform;
- Fig. 6: eine Seitenansicht der Abdeckungsvorrichtung nach einer Ausführungsform;
- Fig. 7: eine Seitenansicht der Abdeckungsvorrichtung nach einer Ausführungsform in einem nicht komprimierten Zustand;
- Fig. 7a: eine Schnittansicht der Abdeckungsvorrichtung nach einer Ausführungsform in einem nicht komprimierten Zustand;
- Fig. 8: eine Seitenansicht der Abdeckungsvorrichtung nach einer Ausführungsform in einem komprimierten Zustand;
- Fig. 8a: eine Schnittansicht der Abdeckungsvorrichtung nach einer Ausführungsform in einem komprimierten Zustand;
- Fig. 9: eine Vorderansicht des Fahrzeugsitzes nach einer Ausführungsform;
- Fig. 10: eine isometrische Ansicht der Abdeckungsvorrichtung nach einer Ausführungsform;
- Fig. 11: eine Seitenansicht der Abdeckungsvorrichtung nach einer Ausführungsform;
- Fig. 11a: eine Schnittansicht der Abdeckungsvorrichtung nach einer Ausführungsform;
- Fig. 12: eine Seitenansicht der Abdeckungsvorrichtung nach einer Ausführungsform;
- Fig. 12a: eine Schnittansicht der Abdeckungsvorrichtung nach einer Ausführungsform;
- Fig. 13: eine Seitenansicht der Abdeckungsvorrichtung nach einer Ausführungsform;
- Fig. 14: eine Seitenansicht der Abdeckungsvorrichtung nach einer Ausführungs-form in einem nicht komprimierten Zustand;
- Fig. 14a: eine Schnittansicht der Abdeckungsvorrichtung nach einer Ausführungs-form in einem nicht komprimierten Zustand;
- Fig. 15: eine Seitenansicht der Abdeckungsvorrichtung nach einer Ausführungs-form in einem komprimierten Zustand;
- Fig. 15a: eine Schnittansicht der Abdeckungsvorrichtung nach einer Ausführungs-form in einem komprimierten Zustand;
- Fig. 16: eine isometrische Ansicht des Fahrzeugsitzes nach einer Ausführungsform;
- Fig. 17: eine Seitenansicht des Fahrzeugsitzes nach einer Ausführungsform;
- Fig. 18: eine Vorderansicht des Fahrzeugsitzes nach einer Ausführungsform;
- Fig. 19: eine Rückansicht des Fahrzeugsitzes nach einer Ausführungsform;
- Fig. 20: eine isometrische Ansicht des Fahrzeugsitzes nach einer Ausführungsform;
- Fig. 21: eine Seitenansicht der Abdeckungsvorrichtung nach einer Ausführungsform;
- Fig. 22: eine Rückansicht der Abdeckungsvorrichtung nach einer Ausführungsform;
- Fig. 23: eine isometrische Ansicht der Abdeckungsvorrichtung nach einer Ausführungsform;
- Fig. 24: eine Rückansicht der Abdeckungsvorrichtung nach einer Ausführungsform;
- Fig. 25: eine Schnittansicht der rahmenartigen Elemente nach einer Ausführungsform;
- Fig. 26: eine Draufsicht der Abdeckungsvorrichtung nach einer Ausführungsform;
- Fig. 27: eine Unteransicht der Abdeckungsvorrichtung nach einer Ausführungsform.

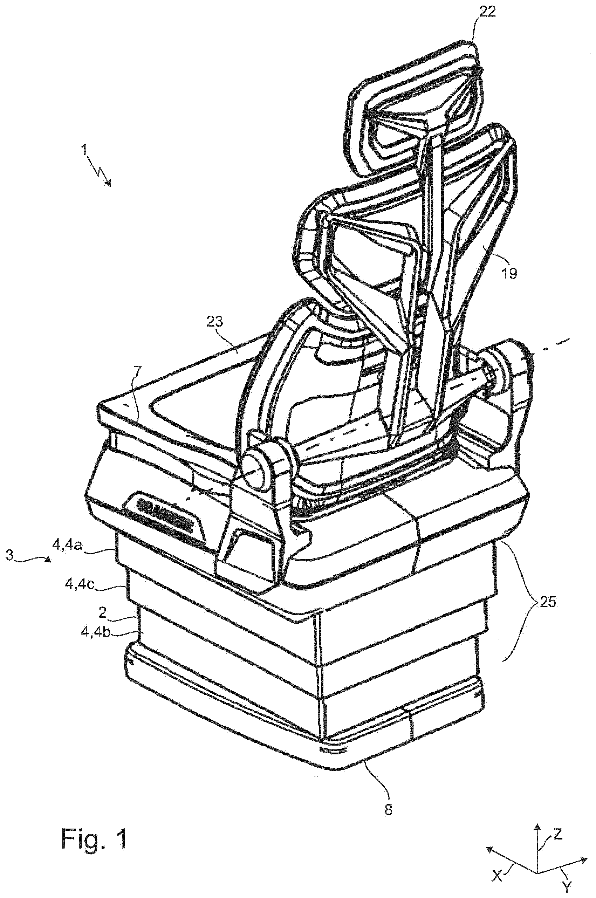

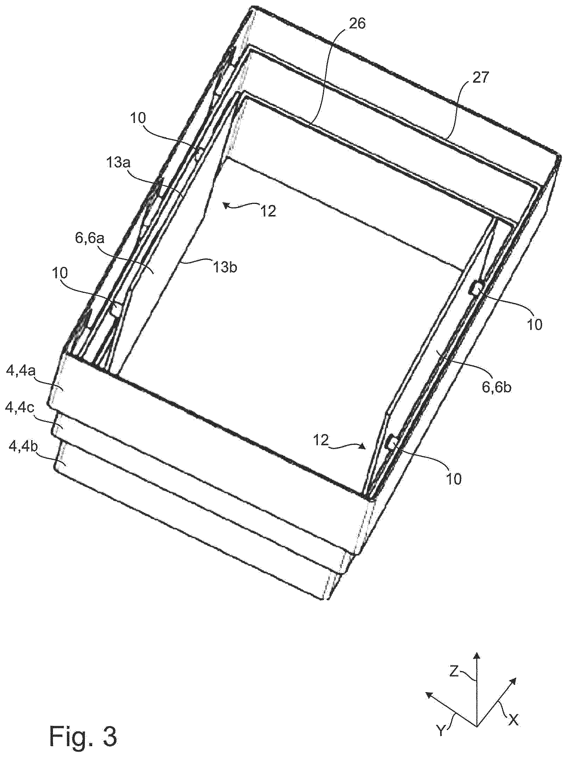

Die Figuren 1 bis 27 zeigen eine Abdeckungsvorrichtung (2) für einen Sitzunterbau (3) eines Fahrzeugsitzes (1), wobei die Abdeckungsvorrichtung (2) den Sitzunterbau (3) seitlich umgibt, wobei die Abdeckungsvorrichtung (2) zumindest zwei in sich steife rahmenartige Elemente (4, 4a, 4b, 4c) umfasst, welche entlang einer Höhenachse Z teleskopartig ineinander verlagerbar sind, wobei zumindest eine Führungsvorrichtung (5) vorgesehen ist, mittels welcher die rahmenartigen Elemente (4, 4a, 4b, 4c) bei einer Verlagerung entlang einer Höhenachse Z geführt werden, wobei zumindest ein elastisches Element (6, 6a, 6b) vorgesehen ist, mittels welchem die Abdeckungsvorrichtung (2) zu einem vorgegebenen Ausgangszustand rückstellbar ist, wobei das elastische Element (6, 6a, 6b) mit zumindest einem rahmenartigen Element (4, 4a, 4b, 4c) verbunden ist.

Ferner zeigen die Figuren 1 bis 27 einen Fahrzeugsitz (1), umfassend ein Sitzteil (7), eine Rückenlehne (19), und einen Sitzunterbau (3), welcher entlang einer Höhenachse Z unter dem Sitzteil (7) angeordnet ist, wobei der Sitzunterbau (3) seitlich von einer Abdeckungsvorrichtung (2) vollständig umschlossen ist, wobei die Abdeckungsvorrichtung (2) zumindest zwei in sich steife rahmenartige Elemente (4, 4a, 4b, 4c) umfasst, welche entlang einer Höhenachse Z teleskopartig ineinander verlagerbar sind, wobei zumindest eine Führungsvorrichtung (5) vorgesehen ist, mittels welcher die rahmenartigen Elemente (4, 4a, 4b, 4c) bei einer Verlagerung entlang einer Höhenachse Z geführt werden, wobei zumindest ein elastisches Element (6, 6a, 6b) vorgesehen ist, mittels welchem die Abdeckungsvorrichtung (2) zu einem vorgegebenen Ausgangszustand rückstellbar ist, wobei das elastische Element (6, 6a, 6b) mit zumindest einem rahmenartigen Element (4, 4a, 4b, 4c) verbunden ist.

Der Fahrzeugsitz (1) sowie die Abdeckungsvorrichtung (2) erstreckt sich entlang einer Höhenachse Z, einer Breitenachse Y und einer Tiefenachse X.

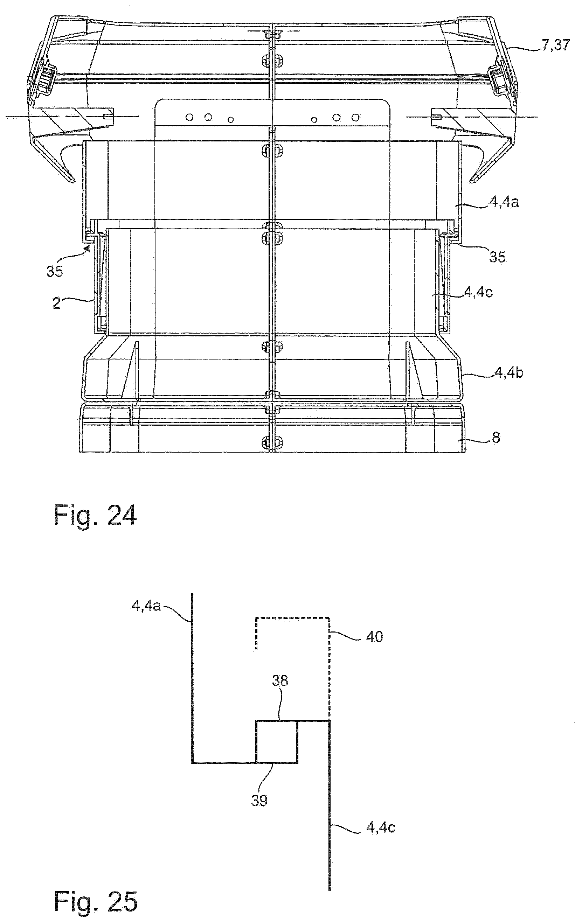

Der Fahrzeugsitz (1) ist in den Figuren 1, 2, 9, 16 bis 20 dargestellt. Dabei ist erkennbar, dass an der Rückenlehne (19) weiterhin ein Kopfteil (22) angeordnet sein kann. Der Fahrzeugsitz (1) kann weiterhin Polsterelemente (23) umfassen, welche sowohl an dem Sitzteil (7) als auch an der Rückenlehne (19) und/oder dem Kopfteil (22) angeordnet sein können. In Figur 24 ist ein Ausführungsbeispiel dargestellt, welches Armlehnen (24) umfasst.

Der Sitzunterbau (3) umfasst ein Tragegestell (20), beispielsweise ein Scherengestell, mittels welchem das Sitzteil (7) mit einem Fußteil (8) verbunden ist. Das Fußteil (8) ist wiederum mit der einer Fahrzeugkarosserie (9) verbunden. Es wäre jedoch auch möglich, dass das Tragegestell (20) direkt mit der Fahrzeugkarosserie (9) verbunden ist. Dies könnte beispielsweise mit einem Schienensystem erfolgen, wodurch der Fahrzeugsitz (1) verlagerbar relativ zu der Fahrzeugkarosse (9) wäre.

Das Sitzteil (7) ist vorzugsweise ein in sich steifer Sitzteilrahmen oder dergleichen, an dessen Unterseite die teleskopartige Abdeckungsvorrichtung (2) angeordnet ist.

Ferner weist der Sitzunterbau (3) eine Feder- und/oder Dämpfungsvorrichtung (21) für Schwingungen in vertikaler (entlang der Höhenachse Z) und oder horizontaler Richtung (entlang der Breitenachse Y und/oder entlang der Tiefenachse X) auf.

Die in den Figuren 1 bis 27 dargestellte Abdeckungsvorrichtung (2) ist rechteckförmig (entlang den Achsen X und Y) ausgestaltet und weist eine Erstreckung entlang der Höhenachse Z auf.

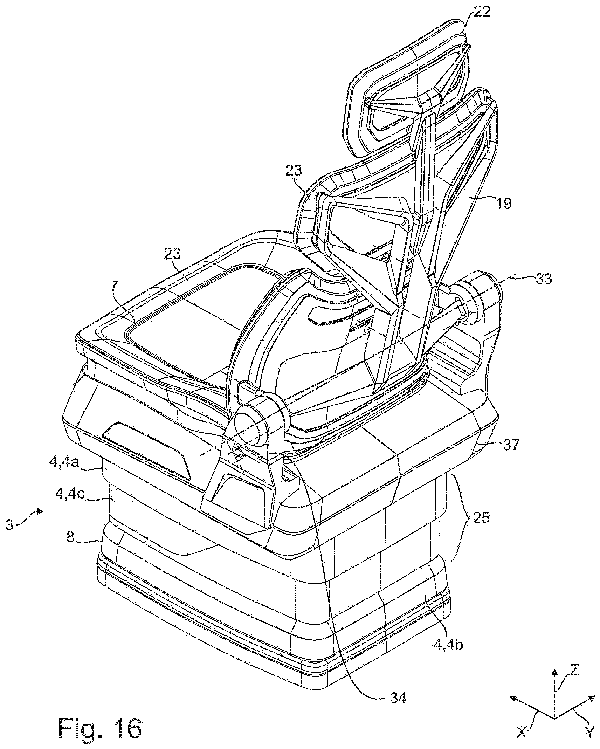

Die Abdeckungsvorrichtung (2) gemäß den Figuren 1 bis 15 umfasst zumindest drei in sich steife, rahmenartige Elemente (4, 4a, 4b, 4c) insbesondere drei in sich steife, rahmenartige Elemente (4, 4a, 4b, 4c). Die Ausführungsformen gemäß den Figuren 16 bis 27 umfassen zunächst zwei in sich steife rahmenartige Elemente (4, 4a, 4c). Ein weiteres unterstes rahmenartiges Element (4, 4b) ist dabei integral mit dem Fußteil (8) ausgebildet.

Das oberste rahmenartige Element (4, 4a) ist an einem Sitzteil (7) angeordnet. Dies kann lediglich ein Anliegen sein oder auch eine feste Fixierung. Das unterste rahmenartige Element (4, 4b) ist an dem Fußteil (8) des Fahrzeugsitzes (1) angeordnet. Dies kann ebenso lediglich ein Anliegen sein oder auch eine feste Fixierung sein. Ferner besitzt das oberste rahmenartige Element (4, 4a) eine größere Abmessung, d.h. größere Seitenlängen, als das mittlere rahmenartige Element (4, 4c), wodurch das mittlere rahmenartige Element (4, 4c) innerhalb des obersten rahmenartigen Element (4, 4a) anordenbar ist. Das mittlere rahmenartige Element (4, 4c) besitzt eine größere Abmessung, d.h. größere Seitenlängen, als das unterste rahmenartige Element (4, 4b), wodurch das unterste rahmenartige Element (4, 4b) innerhalb des mittleren rahmenartigen Elements (4, 4b) anordenbar ist. Hierdurch wird eine teleskopartige Höhenänderung der Abdeckvorrichtung realisiert.

In den Ausführungsformen nach den Figuren 1 bis 15 erstreckt sich die Abdeckungsvorrichtung (2) von einer Unterseite des Sitzteils (7) bis zu dem Fußteil (8). Demnach ist die Höhe (25) der Abdeckungsvorrichtung (2) der Abstand zwischen dem Sitzteil (7) und dem Fußteil (8). Eine minimale Höhe der Abdeckungsvorrichtung (2) entspricht somit einer minimalen Höhe des Sitzunterbaus (3), welche einer vollständigen Einfederung entspricht. Eine solche vollständige Einfederung umfasst einen sogenannten Anschlag, bei welchem eine weitere Verlagerung des Scherengestells nicht mehr möglich ist. Analog entspricht eine maximale Höhe der der Abdeckungsvorrichtung (2) einer maximalen Höhe des Sitzunterbaus (3).

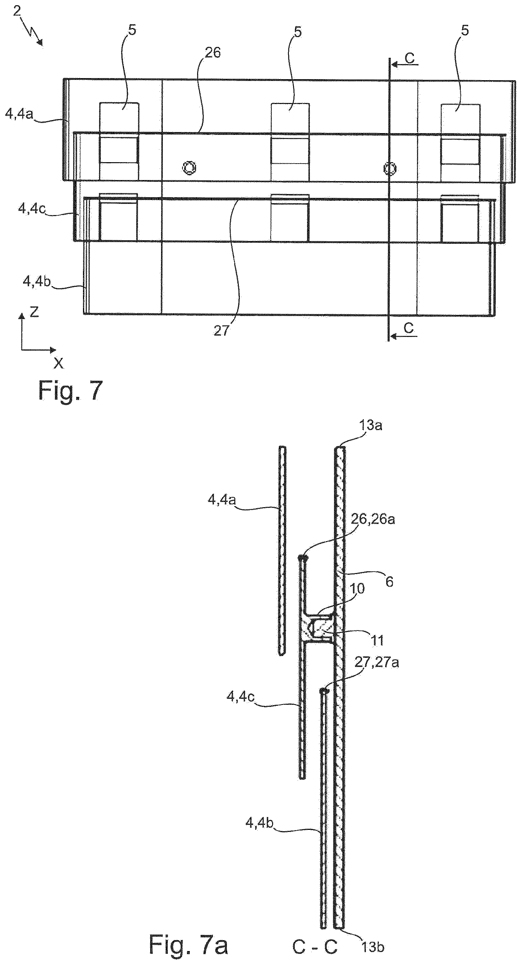

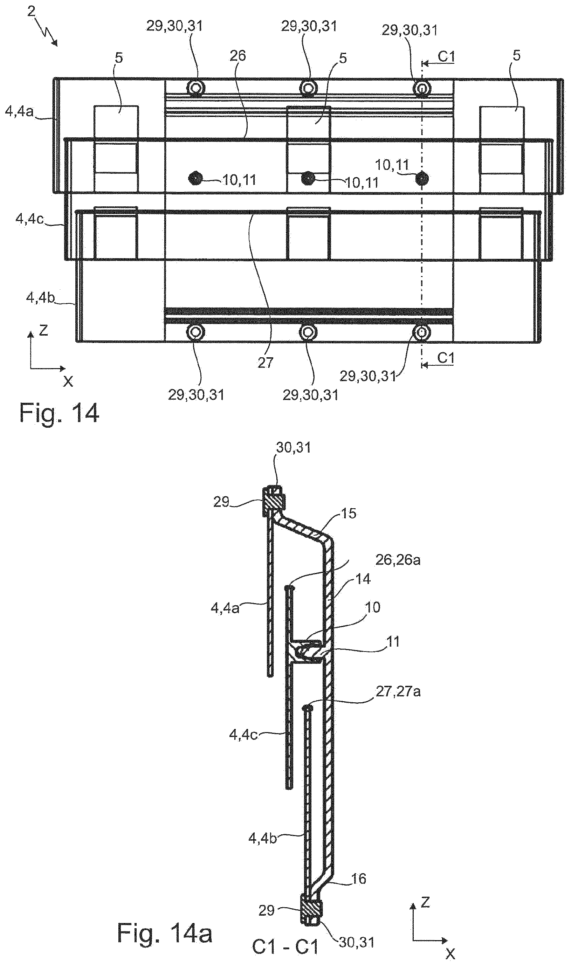

Das mittlere rahmenartige Element (4, 4c) weist einen oberen Rand (26) auf. Ebenso weist das unterste rahmenartige Element (4, 4b) einen oberen Rand (27) auf. In einer möglichen Ausgangslage ist der obere Rand (26) des mittleren rahmenartigen Elements (4, 4c) in einem mittleren Bereich oder im Wesentlichen mittig innerhalb des obersten rahmenartigen Elements (4, 4a) angeordnet. Ebenso ist in einer möglichen Ausgangslage der obere Rand (27) des untersten rahmenartigen Elements (4, 4b) in einem mittleren Bereich oder im Wesentlichen mittig innerhalb des mittleren rahmenartigen Elements (4, 4c) angeordnet. Dies ist beispielsweise in Figur 7 oder in Figur 14 dargestellt. Dies hat den Vorteil, dass sich das mittlere rahmenartige Element (4, 4c) entlang der Höhenachse Z in beiden Richtungen (nach oben und nach unten) noch relativ zu dem obersten rahmenartigen Element (4, 4a) beziehungsweise das unterste rahmenartige Element (4, 4b) entlang der Höhenachse Z in beiden Richtungen (nach oben und nach unten) noch relativ zu dem mittleren rahmenartigen Element (4, 4c) verlagern lässt. Mit anderen Worten ist noch ein Restverlagerungsweg in beiden Richtungen (nach oben und nach unten) für das jeweilige rahmenartige Element (4, 4b, 4c) vorhanden. Dieser genannte mittlere Bereich kann natürlich durch die Höheneinstellung entsprechend variiert werden.

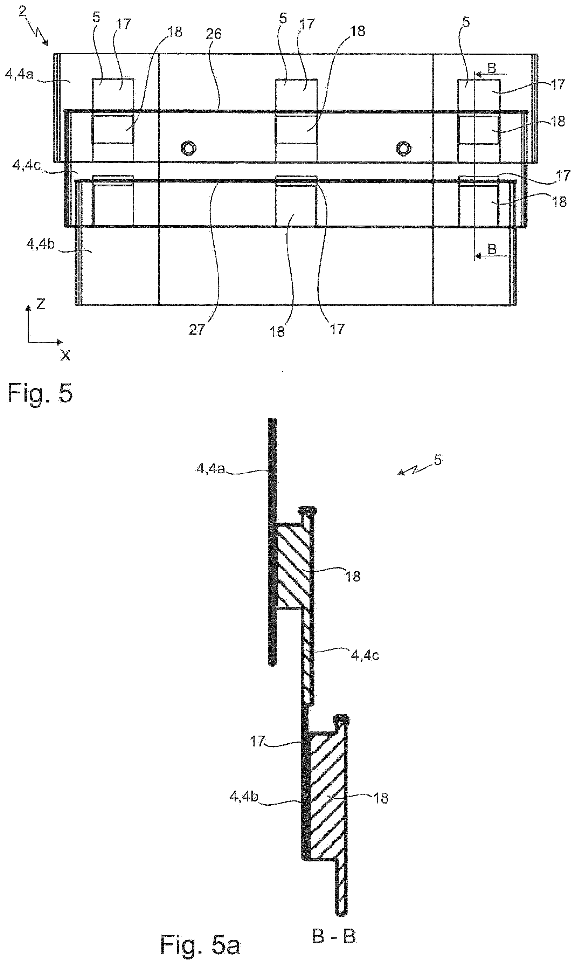

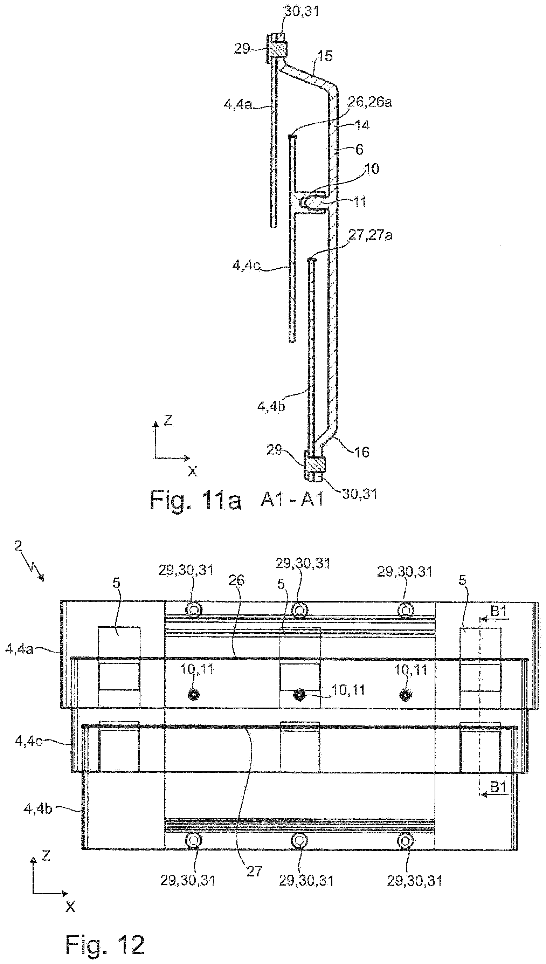

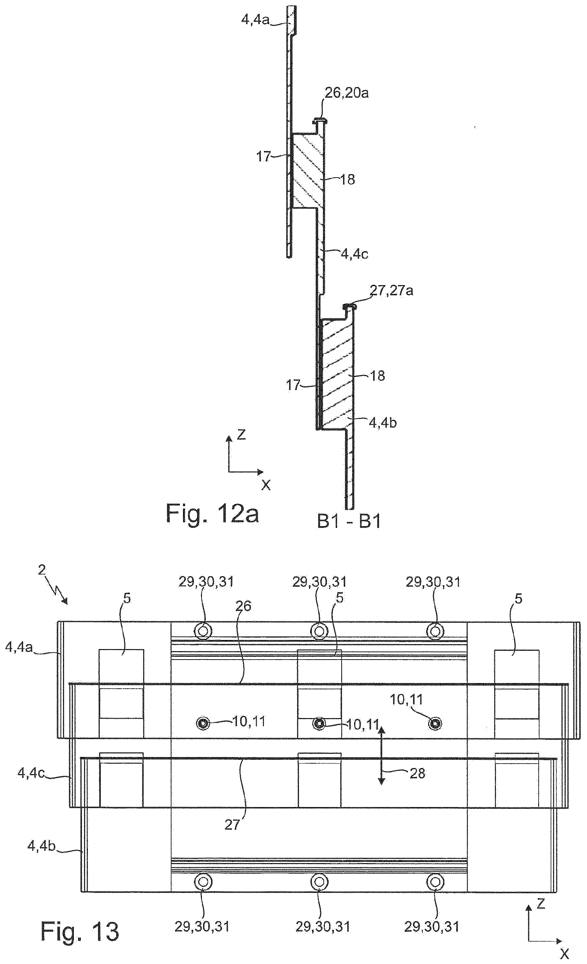

Die Führungsvorrichtung (5) umfasst eine Gleitaufnahme (17) in Form einer Nut oder einer Schiene und ein Führungselement (18), welches in oder an der Gleitaufnahme (17) in Form einer Nut oder einer Schiene geführt ist. Die Gleitaufnahme (17) und das Führungselement (18) sind an je einem entlang der Höhenachse Z untereinander angeordneten rahmenartigen Element (4, 4a, 4b, 4c) angeordnet. Vorliegend ist eine Gleitaufnahme (15) an dem obersten rahmenartigen Element (4, 4a,) angeordnet. Das in dieser Gleitaufnahme (15) geführte Führungselement (17) ist in dem mittleren rahmenartigen Element (4, 4c) angeordnet. Das mittlere rahmenartigen Element (4, 4c) weist eine weitere Gleitaufnahme (15) auf, welche entlang der Höhenachse Z unter dem Führungselement (17) angeordnet ist. In dieser weiteren Gleitaufnahme (15) ist ein weiteres Führungselement (17) geführt, welches an dem untersten rahmenartigen Element (4, 4b) angeordnet ist. Dies ist beispielsweise in den Figuren 5a und 12a gut ersichtlich. Die Abdeckungsvorrichtung ist dabei vorteilhafterweise mit 6 Führungsvorrichtungen (5) ausgestattet. An jeder sich entlang der Tiefenachse X erstreckenden Innenseite (12) sind dabei jeweils drei Führungsvorrichtungen (5) vorgesehen. Diese drei Führungsvorrichtungen (5) sind zueinander entsprechend beabstandet, so dass eine leichtgängige Führung der rahmenartigen Elemente (4, 4a, 4b, 4c) ermöglicht wird. Die Erfindung ist jedoch nicht beschränkt auf diese Anzahl an Führungsvorrichtungen (5).

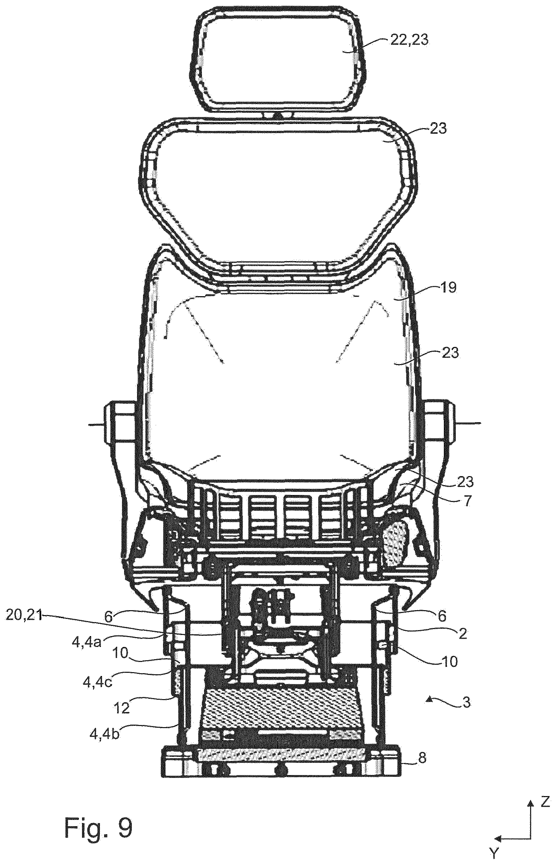

Das zumindest eine elastische Element (6, 6a, 6b) ist zumindest abschnittsweise plattenartig ausgebildet. Die Ausführungsformen gemäß den Figuren 1 bis 8a umfassen zwei elastische Elemente (6, 6a, 6b), welche insgesamt plattenartig ausgebildet sind. Die Ausführungsformen gemäß den Figuren 9 bis 15a umfassen zwei elastische Elemente (6, 6a, 6b), welche einen plattenartig ausgebildeten ersten Abschnitt (14) aufweisen.

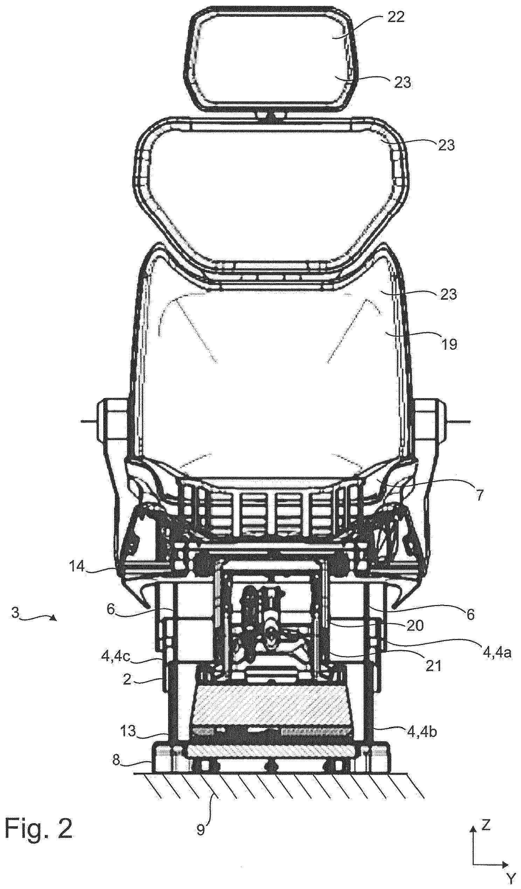

Das zumindest eine elastische Element (6, 6a, 6b) ist mit dem mittleren rahmenartigen Element (4, 4c) mittels form- und/oder kraftschlüssigen Verbindungen an dem mittleren rahmenartigen Element (4, 4c) angeordnet (Figuren 2, 3, 4, 4a, 7, 7a, 8, 8a, 9, 10, 11, 11a 14, 14a,15, 15a). In den Ausführungsformen nach Figuren 1 bis 8a sind zwei form- und/oder kraftschlüssigen Verbindungen vorgesehen. In den Ausführungsformen nach Figuren 9 bis 15a sind drei form- und/oder kraftschlüssige Verbindungen vorgesehen. Diese Verbindungen umfassen je eine Aufnahme (10), in welcher ein Verbindungselement (11) des elastischen Elements (6,6a,6b) aufgenommen ist. Die Aufnahmen (10) sind entlang der Tiefenachse X beabstandet. Das Verbindungselement (16) ist ein zapfenartiger Vorsprung des elastischen Elements (6, 6a, 6b), welcher in der Aufnahme (10) formschlüssig aufgenommen ist.

Gemäß den Ausführungsformen nach Figur 1 bis 8a weist das elastische Element (6, 6a, 6b) eine Ausdehnung entlang der Höhenachse Z auf. Das elastische Element (6, 6a, 6b) weist einen unteren Rand (13b) auf, welcher das Fußteil (8) oder eine Oberfläche der Fahrzeugkarosserie (9) kontaktiert. Ferner weist das elastische Element (6, 6a, 6b) einen oberen Rand (13a) auf, welcher das Sitzteil (7) kontaktiert. Neben einer solchen Kontaktierung können der untere (13b) und der obere Rand (13a) mit dem Fußteil (8) beziehungsweise dem Sitzteil verbunden sein. Durch die Höheneinstellung des Fahrzeugsitzes (1) kann demnach bereits eine gewisse Komprimierung oder Dehnung der elastischen Elemente (6, 6a, 6b) erfolgen. Demnach könnten der untere (13b) und der obere Rand (13a) der elastischen Elemente (6, 6a, 6b) durch eine Komprimierung dessen auch gegen das Sitzteil (7) und das Fußteil (8) gepresst werden.

Die Abdeckungsvorrichtung (2) umfasst zwei elastische Elemente (6, 6a, 6b), welche an je einer Innenseite (12) der rahmenartigen Elemente (4, 4a, 4b, 4c) angeordnet sind. Die elastischen Elemente (6, 6a, 6b) sind dabei an sich gegenüberliegenden Innenseiten (12) angeordnet, welche sich entlang der Tiefenachse X erstrecken. Die Verbindung mit dem mittleren rahmenartigen Element (4, 4c) erfolgt dabei über zumindest eine Aufnahme (10), in welcher ein zapfenartiges Verbindungselement formschlüssig aufgenommen ist.

Durch eine Verlagerung des Sitzteil (7) relativ zu dem Fußteil (8) ist eine Verformungskraft entlang der Höhenachse Z in das elastische Element (6, 6a, 6b) einbringbar. Dies hat eine Kompression oder Dehnung der elastischen Elemente (6, 6a, 6b) zur Folge. Wirken demnach vertikale Kräfte auf den Fahrzeugsitz (1), welche beispielsweise durch vertikale Schwingungen während der Fahrt erzeugt werden, variiert der Abstand zwischen dem Sitzteil (7) und der Fahrzeugkarosserie (9) beziehungsweise dem Fußteil (8). Die Feder- und/oder Dämpfungseinrichtung (21) dient dazu, das Sitzteil (7) wieder in eine entsprechende vertikale Ausgangslage überzuführen. Dementsprechend werden durch die Verlagerung des Sitzteils (7) auch die rahmenartigen Elemente (4, 4a, 4b, 4c) relativ zueinander verlagert, beziehungsweise ineinander oder auseinander geschoben. Durch die elastischen Elemente (6, 6a, 6b) wird der Ausgangszustand, welcher die Ausgangshöhe oder die relative Anordnung der rahmenartigen Elemente (4, 4a, 4b, 4c) zueinander sein kann, wieder hergestellt. Bei einer festen Fixierung des obersten rahmenartigen Elements (4, 4a) und des untersten rahmenartigen Elements (4, 4b) an dem Sitzteil (7), beziehungsweise an dem Fußteil (8) wäre eine Rückstellung in eine Ausgangshöhe durch die elastischen Elemente (6, 6a, 6b) nicht notwendig, da dies durch die Fixierung erfolgt. Eine Rückstellung zu einer relativen Anordnung des mittleren Elements (4, 4c) relativ zu dem oberen (4, 4a) beziehungsweise unterem rahmenartigen Element (4, 4b) erfolgt jedoch durch das elastische Element (6, 6a, 6b) beziehungsweise durch die Verbindung des elastischen Elements (6, 6a, 6b) mit dem mittleren rahmenartigen Element (4, 4c).

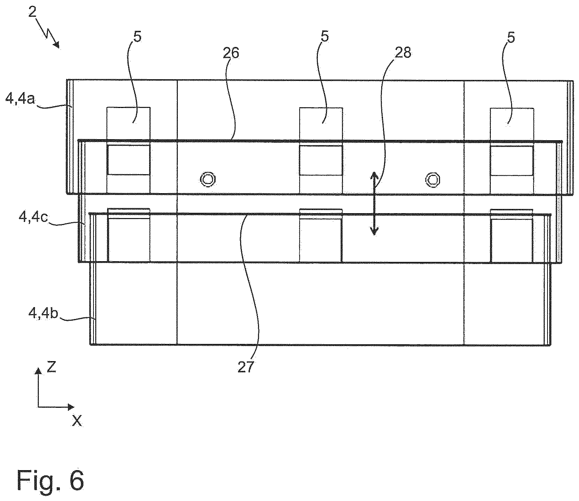

Die Figur 6 zeigt die Abdeckungsvorrichtung (2) und einen Doppelpfeil (28), welcher entlang der Höhenachse Z orientiert ist. Die rahmenartigen Elemente (4, 4a, 4b, 4c) können sich dabei entlang des Doppelpfeils (28) relativ zueinander verschieben.

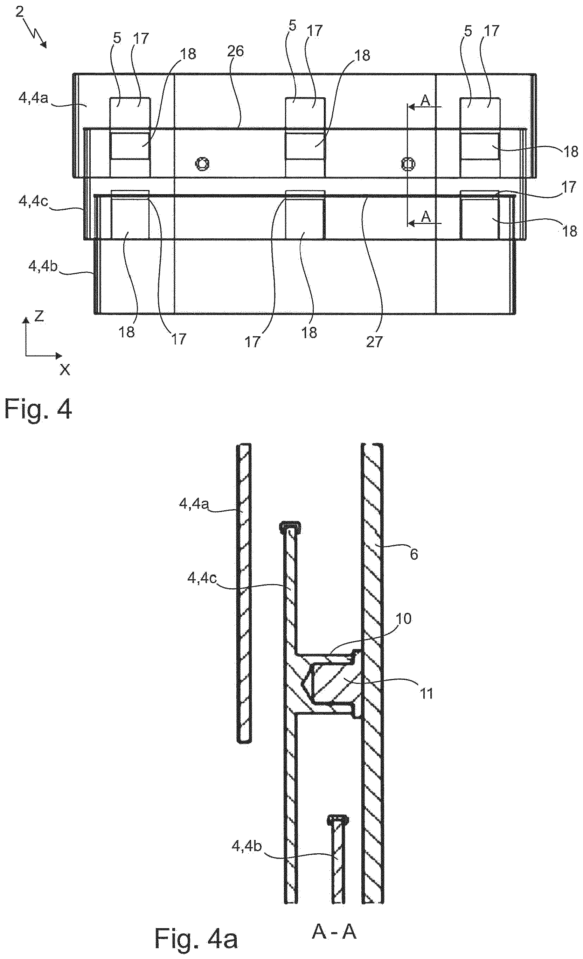

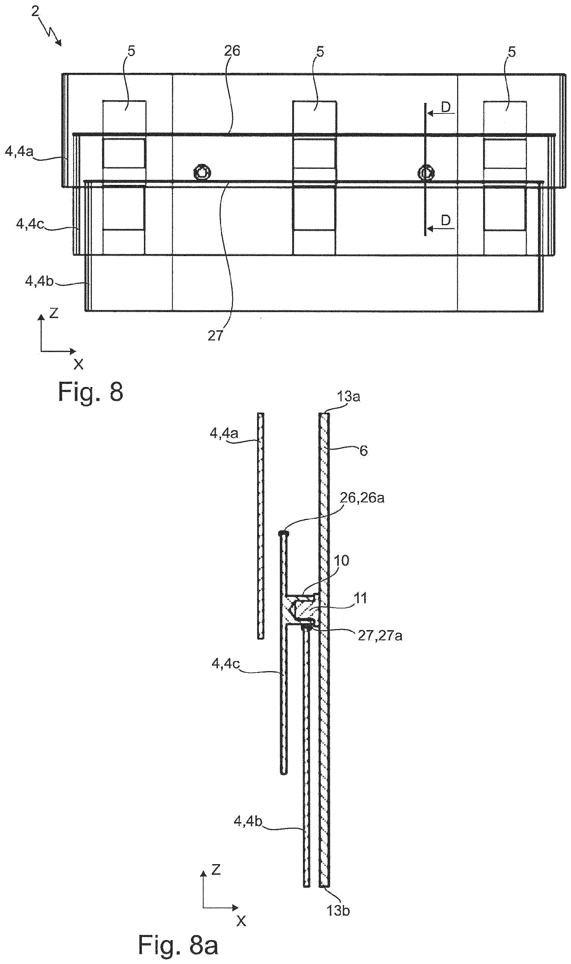

In den Figuren 7 und 7a ist ein möglicher Ausgangszustand der Abdeckungsvorrichtung (2) dargestellt. In den Figuren 8 und 8a ist ein eingefederter Zustand des Fahrzeugsitzes (1) dargestellt, in welchem die rahmenartigen Elemente (4, 4a, 4b, 4c) der Abdeckungsvorrichtung (2) sich teleskopartig ineinander verschoben haben. Ein Abschnitt des oberen Rands (27), des sich entlang der Tiefenachse X erstreckenden Anschnitts des untersten rahmenartigen Elements (4, 4b) liegt dabei an den jeweiligen beiden Aufnahmen des mittleren Elements (4, 4c) an. Der obere Rand (27) stellt zusammen mit den vier Aufnahmen (11) eine Stopperfunktion bereit. Hierzu kann der obere Rand (27) entsprechend mit einem kissenartigen Element (27a) ausgestattet sein. Ebenso kann der oberen Rand (26) des mittleren rahmenartigen Elements (4, 4a, 4b, 4c) eine Stopperfunktion zusammen mit einem entsprechenden Element des oberen rahmenartigen Elements (4, 4a) oder dem Sitzteil (7) wahrnehmen. Auch hier kann ein kissenartiges Element (26a) am oberen Rand (26) des mittleren rahmenartigen Elements (4, 4c) vorgesehen sein. Dies ist in der Figuren 4a, 5a, 7a, 8a gut ersichtlich.

In den Ausführungsformen gemäß den Figuren 9 bis 15a ist das zumindest ein elastisches Element (6, 6a, 6b) mit dem entlang der Höhenachse Z obersten rahmenartigen Element (4, 4a) verbunden. Ebenso ist das zumindest eine elastische Element (6, 6a, 6b) mit dem untersten rahmenartigen Element (4, 4a) verbunden. Schließlich ist das zumindest eine elastische Element (6, 6a, 6b) mit dem mittleren rahmenartigen Element (4, 4c) verbunden. Die Verbindung mit dem mittleren rahmenartigen Element (4, 4c) erfolgt dabei wie bereits beschrieben über die Aufnahme 10, in welcher das zapfenartige Verbindungselement formschlüssig aufgenommen ist. Auch hier ist auf jeder sich entlang der Tiefenachse X erstreckenden Innenseite (12) ein elastisches Element (6, 6a, 6b) angeordnet. Jedes elastische Element (6, 6a, 6b) ist mittels drei formschlüssigen Verbindungen mittels der erwähnten Aufnahmen (10) an dem mittleren rahmenartigen Element (4, 4c) fixiert.

Die elastischen Elemente (6, 6a, 6b) weisen einen ersten Abschnitt (14) auf, der plattenartig ausgebildet ist. Weiterhin weisen die elastischen Elemente (6, 6a, 6b) einen zweiten Abschnitt (15) auf, welcher einen Z-förmigen Querschnitt aufweist und entlang der Höhenachse Z oberhalb des ersten Abschnitts (14) angeordnet ist und in diesen übergeht. Schließlich weisen die elastischen Elemente (6, 6a, 6b) einen dritten Abschnitt (16) auf, welcher einen Z-förmigen Querschnitt aufweist und entlang der Höhenachse Z unterhalb des ersten Abschnitts (14) angeordnet ist und in diesen übergeht. Die elastischen Elemente (6, 6a, 6b) sind mittels des zweiten Abschnitts (15) mit dem obersten rahmenartigen Element (4,4a) verbunden, mittels des dritten Abschnitts (16) mit dem untersten rahmenartigen Element (4, 4b) verbunden. Zur Verbindung werden Verbindungsstifte (29) verwendet, welche in entsprechenden Bohrungen (30, 31) der elastischen Elemente (6, 6a, 6b) und der rahmenartigen Elemente (4, 4a, 4b) vorgesehen sind.

Durch eine Verlagerung des Sitzteil (7) relativ zu dem Fußteil (8) ist auch bei diesen Ausführungsformen nach den Figuren 9 bis 15a eine Verformungskraft entlang der Höhenachse Z in die elastische Elemente (6, 6a, 6b) einbringbar. Dies hat eine Kompression oder Dehnung der elastischen Elemente (6, 6a, 6b) zur Folge. Wirken demnach vertikale Kräfte auf den Fahrzeugsitz (1), welche beispielsweise durch vertikale Schwingungen während der Fahrt erzeugt werden, variiert der Abstand zwischen dem Sitzteil (7) und der Fahrzeugkarosserie (9), beziehungsweise dem Fußteil (8). Die Feder- und/oder Dämpfungseinrichtung (21) dient dazu, das Sitzteil (7) wieder in eine entsprechende vertikale Ausgangslage überzuführen. Bei diesem Ausführungsbeispiel wird die Dehnung oder Kompression durch die formschlüssigen Verbindungen der elastischen Elemente (6, 6a, 6b) mit den rahmenartigen Elementen (4, 4a, 4b, 4c) erzeugt.

Durch die Verlagerung des Sitzteils (7) werden auch die rahmenartigen Elemente (4, 4a, 4b, 4c) relativ zueinander verlagert, beziehungsweise ineinander oder auseinander geschoben. Durch die elastischen Elemente (6, 6a, 6b) wird der Ausgangszustand, welcher die Ausgangshöhe oder die relative Anordnung der rahmenartigen Elemente (4, 4a, 4b, 4c) zueinander sein kann, wieder hergestellt. Bei einer festen Fixierung des obersten rahmenartigen Elements (4, 4a) und des untersten rahmenartigen Elements (4, 4b) an dem Sitzteil (7) beziehungsweise an dem Fußteil (8) wäre eine Rückstellung in eine Ausgangshöhe durch die elastischen Elemente (6, 6a, 6b) nicht notwendig, da dies durch die Fixierung erfolgt. Eine Rückstellung zu einer relativen Anordnung des mittleren Elements (4, 4c) relativ zu dem oberen (4, 4a), beziehungsweise unterem rahmenartigen Element (4, 4b) erfolgt jedoch durch das elastische Element (6, 6a, 6b).

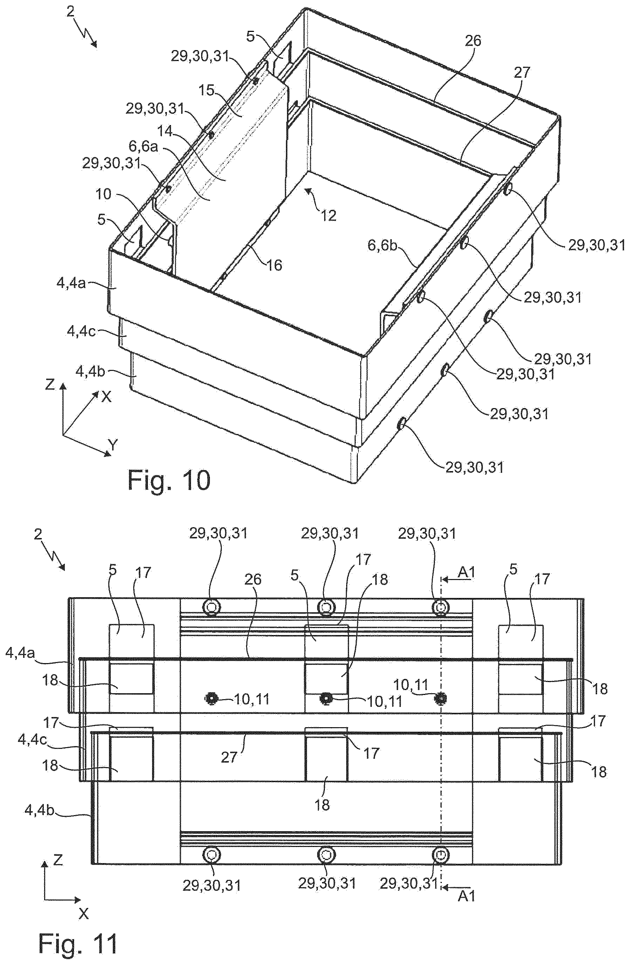

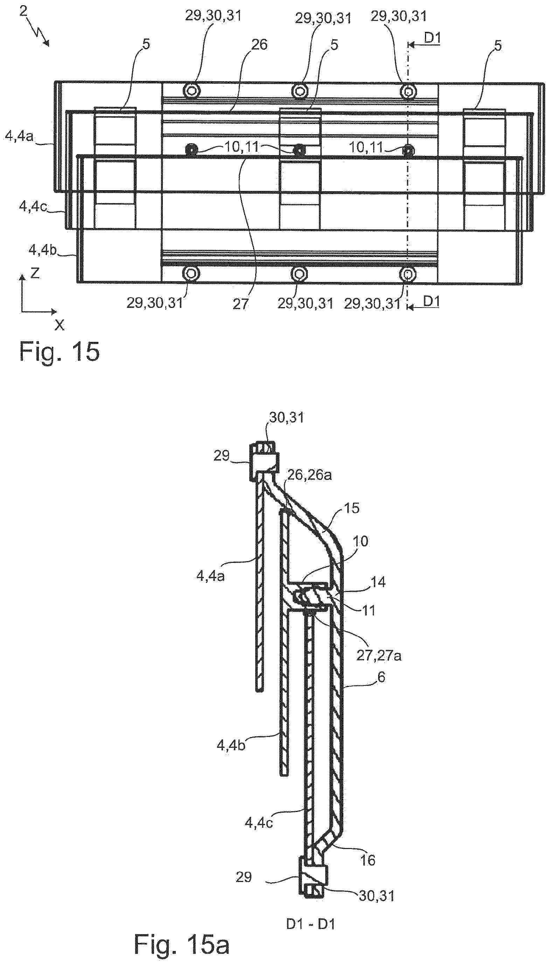

Die Figur 13 zeigt die Abdeckungsvorrichtung (2) und einen Doppelpfeil (28), welcher entlang der Höhenachse Z orientiert ist. Die rahmenartigen Elemente (4, 4a, 4b, 4c) können sich dabei entlang des Doppelpfeils (28) relativ zueinander verschieben. In den Figuren 14 und 14a ist ein möglicher Ausgangszustand der Abdeckungsvorrichtung (2) dargestellt. In den Figuren 15 und 15a ist ein eingefederter Zustand des Fahrzeugsitzes (1) dargestellt, in welchem die rahmenartigen Elemente (4, 4a, 4b, 4c) der Abdeckungsvorrichtung (2) sich teleskopartig ineinander verschoben haben. Ein Abschnitt des oberen Rands (27), des sich entlang der Tiefenachse X erstreckenden Anschnitts des untersten rahmenartigen Elements (4, 4b) liegt dabei an den jeweiligen Aufnahmen des mittleren Elements (4, 4c) an. Der obere Rand (27) stellen zusammen mit den sechs Aufnahmen (11) eine Stopperfunktion bereit. Hierzu kann der obere Rand (27) entsprechend mit einem kissenartigen Element (27a) ausgestattet sein. In Figur 15a ist ebenso ersichtlich, dass der obere Rand (26) des mittleren rahmenartigen Elements (4, 4a, 4b, 4c) an dem elastischen Element (6, 6a, 6b) anliegt. Auch hier wird eine entsprechende Stopperfunktion bereitgestellt. Auch hier kann ein kissenartiges Element (26a) am oberen Rand (26) des mittleren rahmenartigen Elements (4, 4c) vorgesehen sein. Dies ist in der Figuren 11a, 12a, 14a, 15a gut ersichtlich.

Erfindungsgemäß wird demnach eine Alternative zu den bekannten Faltenbälgen vorgestellt. Hierbei handelt es sich um eine teleskopartige Abdeckungsvorrichtung (2), welche einzelne in sich steife, also nicht elastische, rahmenartige Elemente (4, 4a, 4b, 4c) aufweist.

Die rahmenartigen Elemente (4, 4a, 4b, 4c) können entlang der Höhenachse Z nach unten hin betrachtet ineinander hängen und bei einer Verringerung des Abstands zwischen dem Sitzteil (7) und der Oberseite des Karosseriebodens (9) ineinander verfahren, um weiterhin eine optische Abdeckung von Scherenarmen, Dämpferelementen und Luftfedern zu ermöglichen.

In den Ausführungsformen gemäß den Figuren 16 bis 27 wird ein Fahrzeugsitz (1) beschrieben, mit einer Abdeckvorrichtung, welcher zwei rahmenartigen Elemente (4, 4a, 4c) umfasst. Das unterste rahmenartige Element (4, 4b) ist dabei integral mit dem Fußteil ausgebildet.

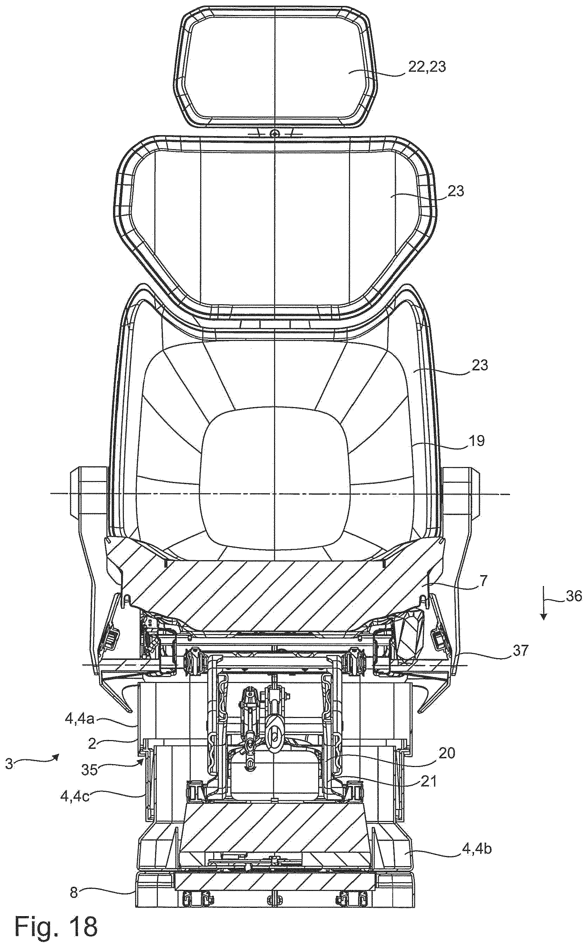

Ferner wird in den Figuren 18, 24, und 25 eine möglich vorteilhafte Ausführungsform dargestellt, bei welcher zwei rahmenartigen Elemente (4, 4a, 4c) in einem maximal ausgezogenen Zustand ineinander hängen. So kann auch bei einer maximalen Höhe des Sitzunterbaus (3) sichergestellt werden, dass der Sitzunterbau (3) freigelegt ist. Diese Funktionalität kann natürlich auch in den bereits genannten Ausführungsformen implementiert werden. Dementsprechend können die Merkmale in den oben beschriebenen Ausführungsformen auch bei diesen Ausführungsformen implementiert sein.

In Fig. 16 wird ein Fahrzeugsitz (1) für ein Nutzfahrzeug dargestellt, welcher eine Rückenlehne (19) und ein Sitzteil (7) aufweist. Die Rückenlehne (19) ist mittels einer Schwenkachse (33), die an sich nach oben erstreckenden Schenkelbauteilen (34) schwenkbar angeordnet ist, schwenkbar gehalten.

Unterhalb des Sitzteiles (7) ist eine Abdeckung (2), die teleskopartig ausgebildet ist, dargestellt. Diese teleskopartige Abdeckung (2) dient zum Abdecken von dahinterliegenden Scherenarmen, Dämpferelementen und Luftfedern.

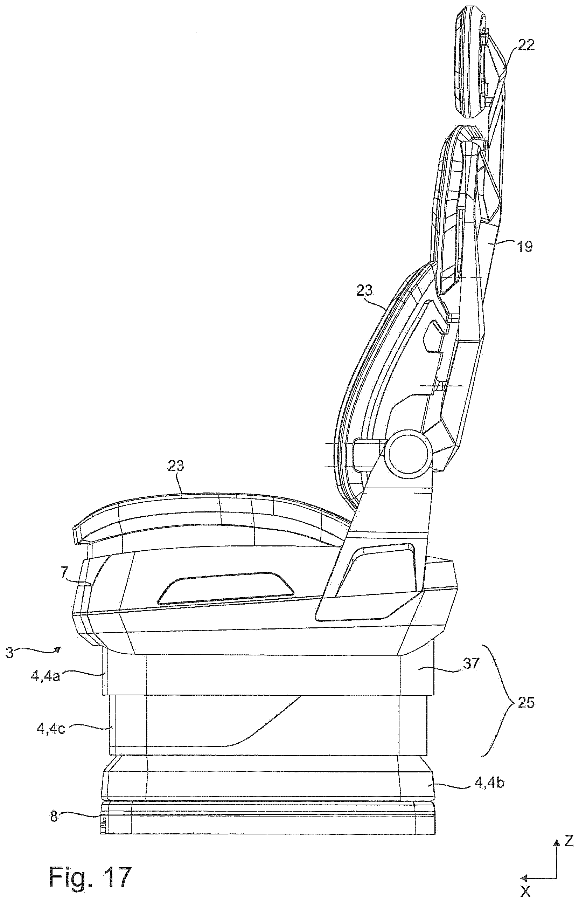

In Fig. 17 weist das Sitzteil (7) an seiner Oberseite ein Polsterelement (23) auf, an seiner Unterseite ist die teleskopartige Abdeckung (2) angeordnet. Diese teleskopartige Abdeckung (2) besteht aus einzelnen Elementen (4, 4a, 4b, 4c), die rahmenartig ausgebildet sind und vorzugsweise in sich greifen.

In Figur 18 sind die Abdeckelemente (4, 4a, 4b, 4c) in einem Querschnitt eines Nutzfahrzeugsitzes nochmal wiedergegeben. Dieser Darstellung ist auch deutlich zu entnehmen, dass im Bereich (35) die einzelnen rahmenartigen Abdeckelemente (4, 4a, 4b, 4c) derart miteinander verbunden sind, dass sie ineinander greifen und beispielsweise das unten angeordnete mittlere Abdeckelement (4, 4c) innerhalb des darüber angeordneten obersten Abdeckelementes (4,4a) hineingeschoben wird, sofern der gesamte Fahrzeugsitz bei einer eingeleiteten Schwingung entlang des Pfeiles (36) sich nach unten bewegt.

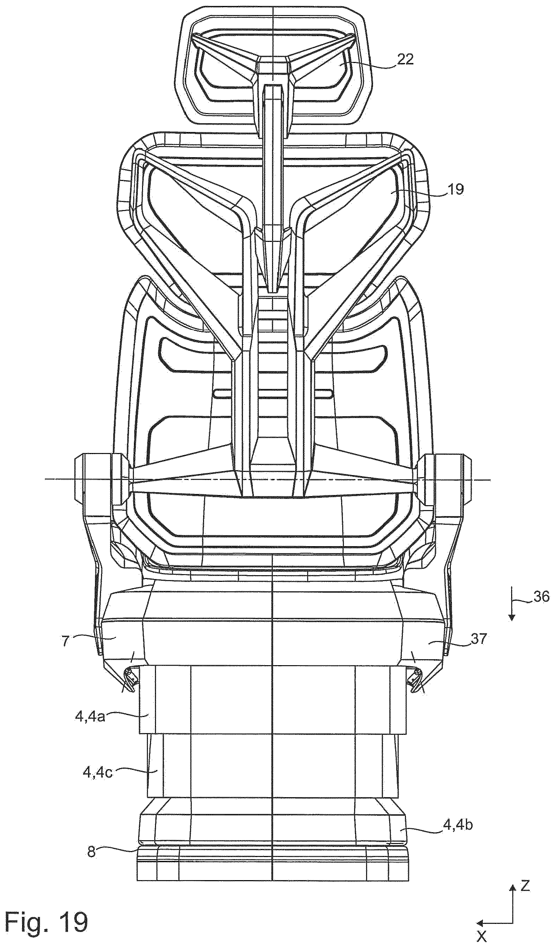

Dies geht auch nochmals aus Figur 19 als rückseitige Außenansicht hervor.

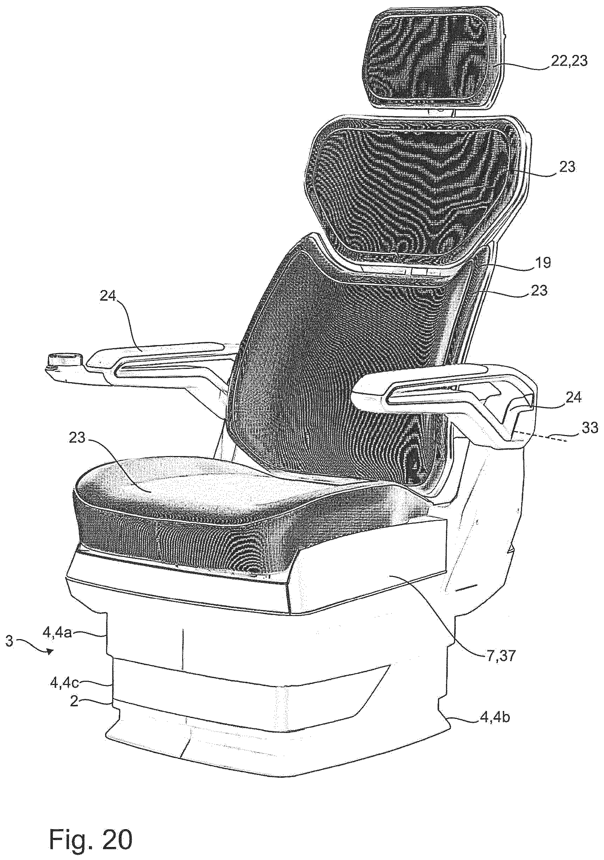

In Figur 20 ist ein derartiger Fahrzeugsitz (1) als Modell wiedergegeben. Wiederum sind die bereits genannten Bauteile zu erkennen, wobei in diesem Fall zusätzlich Armlehnen (24) angeordnet sind. Diese sind vorzugsweise schwenkbar auf der Schwenkachse (33) ebenso angeordnet wie die Rückenlehne (1). Wiederum sind die einzelnen teleskopartigen Abdeckelemente (4, 4a, 4b, 4c) zu erkennen.

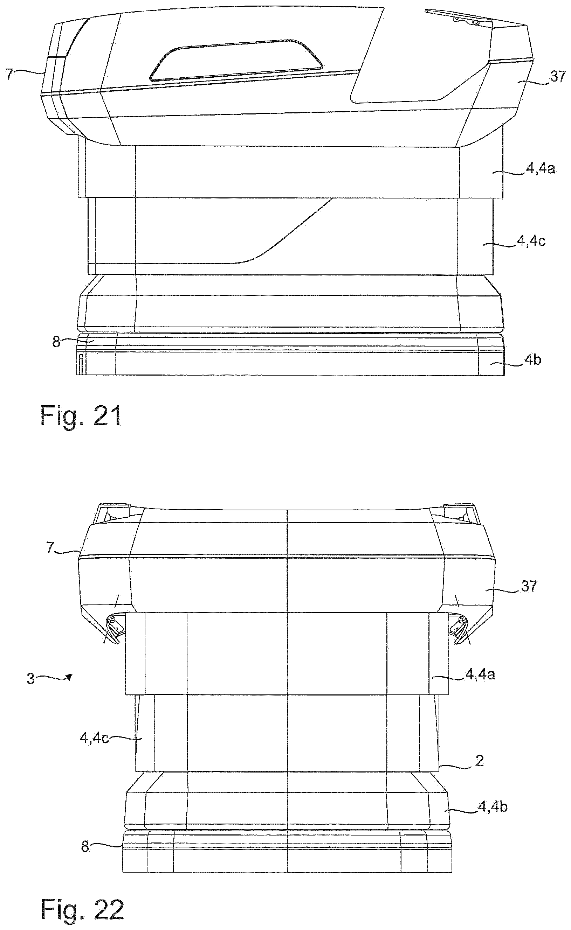

Auch in Figur 21, welche eine Ausschnittsdarstellung der teleskopartigen Abdeckelemente (4, 4a, 4b, 4c) ohne weitere Bauteile des Fahrzeugsitzes (1) wiedergibt, sind diese Abdeckelemente (4, 4a, 4b, 4c) zu sehen. Dies ist hier in einer seitlichen Darstellung wiedergegeben. Die Abdeckelemente (4, 4a, 4b, 4c) können auch mit dem Fußteil (8), welches auch als Abdeckelement (4, 4b) ausgebildet sein kann und ein hier nicht näher dargestelltes Sitzunterteil umfasst, einstückig verbunden sein.

In Figur 22 ist eine Rückansicht dieser teleskopartigen Abdeckelemente (4, 4a, 4b, 4c) wiedergegeben. Wiederum ist das Fußteil (8) als unterstes rahmenartiges Element (4, 4b) ausgebildet beziehungsweise ist das unterste rahmenartige Element (4, 4b) in dem Fußteil (8) integriert.

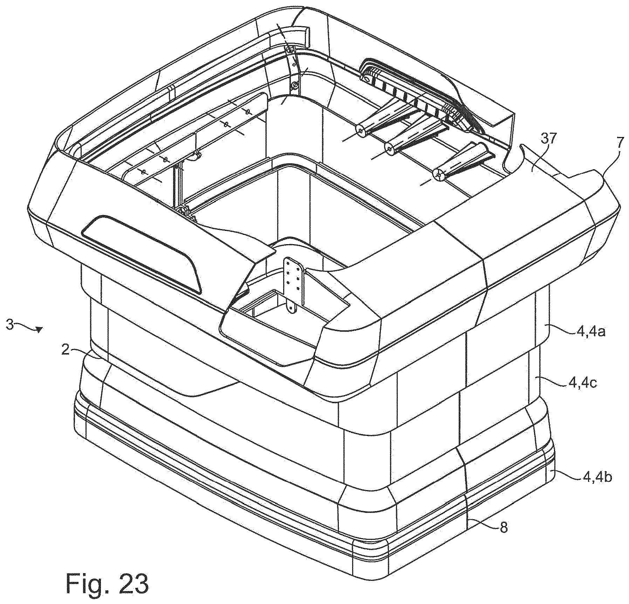

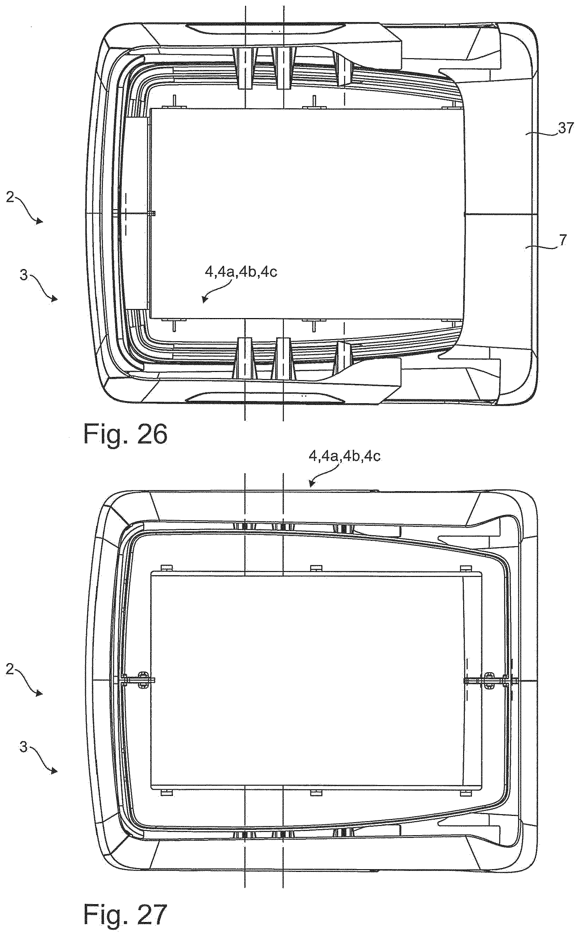

Auch in Figur 23 ist die Abdeckvorrichtung (2) sowie die teleskopartigen Abdeckelemente (4, 4a, 4b, 4c) zusammen mit einem Gehäuseteil (37) des Sitzteil (7) zu sehen. Die Figuren 26 und 27 zeigen die teleskopartigen Abdeckelemente (4, 4a, 4b, 4c) mit dem zusätzlichen Gehäuseteil (37) des Sitzteils (7) in Draufsicht und in Unteransicht.

In Fig. 24 ist nun in einer Querschnittsdarstellung verdeutlicht, dass in dem Bereich (35) die rahmenartigen Elemente (4, 4a, 4c) derart ausgebildet sind, dass sie bei einem maximal auseinandergezogenen Zustand, ineinander hängen. Dies bedeutet, dass das mittlere rahmenartige Element (4, 4c) oberseitig mit einem Rand (38), der sich nach außen neigt und umlaufend angeordnet ist, in einem komplementär ausgebildeten unterseitigen Rand (39), der an der Unterseite des obersten rahmenartigen Elements (4, 4a) umlaufend angeordnet ist, eingreift. Auf diese Art und Weise hängt im maximal ausgezogenen Zustand das mittlere rahmenartigen Element (4, 4c) an dem obersten rahmenartigen Element (4, 4a).

In Fig. 25 ist in eine skizzenartig dargestellten Ausschnittsdarstellung des Bereiches (35) wiedergegeben, dass der oberseitige Randverlauf (38), welcher in einem rechten Winkel zu der restlichen vertikal verlaufenden Wand des mittleren rahmenartigen Elementes (4, 4c) angeordnet ist, in einen entsprechend ausgebildeten Randverlauf (39), der zu einem vertikal verlaufenden Wandbereich des obersten rahmenartigen Elementes (4, 4a) angeordnet ist, eingreift. Auf diese Weise kann auf einfache Art ein Ineinandergreifen der beiden rahmenartigen Elemente (4, 4a, 4c) bei Nach-Oben-Fahren des Fahrzeugsitzes (1) gegenüber dem Karosserieboden (9) erreicht werden, wohingegen bei einem Nach-Unten-Fahren des Fahrzeugsitzes (1) gegenüber dem Karosserieboden (9), also bei einer Verringerung des Höhenabstandes zwischen dem Fahrzeugsitzteil (7) und dem Karosserieboden (9) sich automatisch das mittlere rahmenartige Element (4, 4c) von dem obersten rahmenartigen Element (4, 4a) löst und gegenüber dem obersten rahmenartigen Element (4, 4a) sich in dessen Innenbereich nach oben verschiebt. Dies wird andeutungsweise durch die gestrichelte Linie (40) wiedergegeben

Sämtliche rahmenartige Elemente (4, 4a, 4b, 4c) sind vorzugsweise aus einem steifen Material und mit in sich steifen Außenwänden ausgebildet. Sie sind vorzugsweise rahmenartig ausgebildet, sodass sie den inneren Bereich mit den Scherenarmen und weiteren Bauteilen vollständig abdecken. Dieser Rahmen kann eine Grundform eines Quadrats, eines Quadrats mit abgerundeten Eckbereichen, eines Rechteckes jeglicher Kantenlängen oder auch rund oder ellipsenartig ausgestaltet sein.

Selbstverständlich kann eine derartige teleskopartige Abdeckung (2) aus mehr als zwei Elementen, beispielsweise aus drei, vier oder noch mehr Elementen in unterschiedlicher Höhe oder in gleicher Höhenausbildung bestehen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeugsitz
- 2: Abdeckungsvorrichtung
- 3: Sitzunterbau
- 4: rahmenartige Elemente
- 4a: oberstes rahmenartiges Element
- 4b: unterstes rahmenartiges Element
- 4c: mittleres rahmenartiges Element
- 5: Führungsvorrichtung
- 6: elastisches Element
- 6a: erstes elastische Element
- 6b: zweites elastisches Element
- 7: Sitzteil
- 8: Fußteil
- 9: Fahrzeugkarosserie
- 10: Aufnahme
- 11: Verbindungselement
- 12: Innenseite der rahmenartigen Elemente
- 13a: oberer Rand des elastischen Elements
- 13b: unterer Rand des elastischen Elements
- 14: erster Abschnitt des elastischen Elements
- 15: zweiter Abschnitt des elastischen Elements
- 16: dritter Abschnitt des elastischen Elements
- 17: Gleitaufnahme
- 18: Führungselement
- 19: Rückenlehne
- 20: Tragegestell
- 21: Feder- und/oder Dämpfungsvorrichtung
- 22: Kopfteil
- 23: Polsterelement
- 24: Armlehnen
- 25: Höhe
- 26: oberer Rand des mittleren rahmenartigen Elements
- 26a: kissenartiges Element am oberen Rand des mittleren rahmenartigen Elements
- 27: oberer Rand des untersten rahmenartigen Elements
- 27a: kissenartiges Element am oberen Rand des mittleren rahmenartigen 29 Elements
- 28: Doppelpfeil
- 29: Verbindungsstift
- 30: Bohrung
- 31: Bohrung
- 33: Schwenkachse
- 34: Schenkelbauteilen
- 35: Bereich
- 36: Pfeil
- 37: Gehäuseteil des Sitzteils
- 38: Rand
- 39: Rand
- 40: Linie
- X: Tiefenachse
- Y: Breitenachse
- Z: Höhenachse

## Patentansprüche

1. Abdeckungsvorrichtung (2) für einen Sitzunterbau (3) eines Fahrzeugsitzes (1), wobei die Abdeckungsvorrichtung (2) den Sitzunterbau (3) seitlich umgibt, wobei die Abdeckungsvorrichtung (2) zumindest zwei in sich steife rahmenartige Elemente (4, 4a, 4b, 4c) umfasst,
**dadurch gekennzeichnet, dass**
die rahmenartigen Elemente entlang einer Höhenachse Z teleskopartig ineinander verlagerbar sind, wobei zumindest eine Führungsvorrichtung (5) vorgesehen ist, mittels welcher die rahmenartigen Elemente (4, 4a, 4b, 4c) bei einer Verlagerung entlang einer Höhenachse Z geführt werden, wobei zumindest ein elastisches Element (6, 6a, 6b) vorgesehen ist, mittels welchem die Abdeckungsvorrichtung (2) zu einem vorgegebenen Ausgangszustand rückstellbar ist, wobei das elastische Element (6, 6a, 6b) mit zumindest einem rahmenartigen Element (4, 4a, 4b, 4c) verbunden ist.

2. Abdeckungsvorrichtung (2) nach Anspruch 1,
**dadurch gekennzeichnet, dass**
die Abdeckungsvorrichtung (2) zumindest drei in sich steife rahmenartige Elemente (4, 4a, 4b, 4c) umfasst, wobei die Abdeckungsvorrichtung (2) drei in sich steife rahmenartige Elemente (4, 4a, 4b, 4c) umfasst, wobei das zumindest eine elastische Element (6, 6a, 6b) mit einem mittleren rahmenartigen Element (4, 4c) verbunden ist, wobei die Abdeckungsvorrichtung (2) ein entlang der Höhenachse Z oberstes (4, 4a) und ein entlang der Höhenachse Z unterstes rahmenartiges Element (4, 4b) umfasst, wobei das oberste rahmenartige Element (4, 4a) an einem Sitzteil (7) anordenbar ist, wobei das unterste rahmenartige Element (4, 4b) an einem Fußteil (8) des Fahrzeugsitzes (1) oder an einer Oberfläche der Fahrzeugkarosserie (9) anordenbar ist.

3. Abdeckungsvorrichtung (2) nach Anspruch 2,
**dadurch gekennzeichnet, dass**
das zumindest eine elastische Element (6, 6a, 6b) mittels zumindest einer form- und/oder kraftschlüssigen Verbindung an dem mittleren rahmenartigen Element (4, 4c) angeordnet ist, wobei das zumindest eine elastische Element (6, 6a, 6b) mittels einer Klemm- und/oder Schnapp- und oder Klippverbindung an dem mittleren rahmenartigen Element (4, 4c) angeordnet ist, wobei das mittlere rahmenartige Element (4, 4c) zumindest eine Aufnahme (10) aufweist, in welcher ein Verbindungselement (11) des zumindest einen elastischen Elements (6, 6a, 6b) aufgenommen ist.

4. Abdeckungsvorrichtung (2) nach einem der vorhergehenden Ansprüche,
**dadurch gekennzeichnet, dass**
das zumindest eine elastische Element (6, 6a, 6b) zumindest abschnittsweise plattenartig ausgebildet ist, wobei das elastische Element (6, 6a, 6b) an einer Innenseite (12) der rahmenartigen Elemente (4, 4a, 4b, 4c), welche dem Sitzunterbau (3) zugewandt ist, angeordnet ist, wobei die Abdeckungsvorrichtung (2) zumindest zwei elastische Elemente (6, 6a, 6b) aufweist, wobei je zwei elastische Elemente (6, 6a, 6b) an sich gegenüberliegenden Innenseiten (12) der rahmenartigen Elemente (4, 4a, 4b) angeordnet sind.

5. Abdeckungsvorrichtung () nach einem der vorhergehenden Ansprüche
**dadurch gekennzeichnet, dass**
das zumindest eine elastische Element (6, 6a, 6b) eine Ausdehnung entlang der Höhenachse Z aufweist, so dass ein unterer Rand (13b) des elastischen Elements ein Fußteil (8) oder eine Oberfläche der Fahrzeugkarosserie (9) kontaktieren und/oder ein oberer Rand (13a) des elastischen Elements (6, 6a, 6b) das Sitzteil (7) kontaktieren kann, wobei eine Verfomungskraft entlang der Höhenachse Z durch das Sitzteil (7) und/oder das Fußteil (8) des Fahrzeugsitzes (1) beziehungsweise der Oberfläche der Fahrzeugkarosserie (9) in das elastische Element (6, 6a, 6b) einbringbar ist, wobei die Verformungskraft unmittelbar durch einen Kraft- oder Formschluss einbringbar ist.

6. Abdeckungsvorrichtung (2) nach einem der vorhergehenden Ansprüche 2 bis 4,
**dadurch gekennzeichnet, dass**
das zumindest eine elastische Element (6, 6a, 6b) mit dem entlang der Höhenachse Z obersten rahmenartigen Element (4, 4a) verbunden ist, wobei das zumindest eine elastische Element (6, 6a, 6b) mit dem entlang der Höhenachse Z untersten rahmenartigen Element (4, 4a) verbunden ist, wobei das zumindest eine elastische Element (6, 6a, 6b) mit dem entlang der Höhenachse Z obersten rahmenartigen Element (4, 4a) und dem entlang der Höhenachse Z untersten rahmenartigen Element (4, 4b) verbunden ist, wobei das zumindest eine elastische Element (6, 6a, 6b) mit dem entlang der Höhenachse Z obersten rahmenartigen Element (4,4a), dem entlang der Höhenachse Z untersten rahmenartigen Element (4, 4b) verbunden ist und dem mittleren rahmenartigen Element (4, 4c) verbunden ist.

7. Abdeckungsvorrichtung (2) nach Anspruch 6,
**dadurch gekennzeichnet, dass**
das zumindest eine elastische Element (6, 6a, 6b) einen ersten Abschnitt (14) aufweist, der plattenartig ausgebildet ist, wobei das zumindest eine elastische Element (6, 6a, 6b ) einen zweiten Abschnitt (15) aufweist, welcher einen Z-förmigen Querschnitt aufweist und entlang der Höhenachse Z oberhalb des ersten Abschnitts (14) angeordnet ist und in diesen übergeht, wobei das elastische Element (6, 6a, 6b) einen dritten Abschnitt (16) aufweist, welcher einen Z-förmigen Querschnitt aufweist und entlang der Höhenachse Z unterhalb des ersten Abschnitts (14) angeordnet ist und in diesen übergeht, wobei das zumindest eine elastische Element (6, 6a, 6b) mittels des zweiten Abschnitts (15) mit dem obersten rahmenartigen Element (4,4a) verbunden ist, wobei das zumindest eine elastische Element (6, 6a, 6b) mittels des dritten Abschnitts (16) mit dem untersten rahmenartigen Element (4, 4b) verbunden ist.

8. Abdeckungsvorrichtung (2) nach einem der vorhergehenden Ansprüche,
**dadurch gekennzeichnet, dass**
die Führungsvorrichtung (5) eine Gleitaufnahme (17) in Form einer Nut oder einer Schiene umfasst, welche an einem rahmenartigen Element (4, 4a, 4b, 4c) angeordnet ist, wobei die Führungsvorrichtung (5) ein Führungselement (18) umfasst, welches an einem rahmenartigen Element (4, 4a, 4b, 4c) angeordnet ist, wobei ein Führungselement (18) in oder an der Gleitaufnahme (17) in Form einer Nut oder einer Schiene geführt ist, wobei das Führungselement (18) an einem rahmenartigen Element (4, 4b, 4c) angeordnet ist, welches entlang der Höhenachse Z unter dem rahmenartigen Element (4, 4a, 4b) mit der Gleitaufnahme (17) angeordnet ist.

9. Fahrzeugsitz (1), umfassend ein Sitzteil (7), eine Rückenlehne (18), und einen Sitzunterbau (3), welcher entlang einer Höhenachse Z unter dem Sitzteil (7) angeordnet ist, wobei der Sitzunterbau (3) seitlich von einer Abdeckungsvorrichtung (2) vollständig umschlossen ist,
**dadurch gekennzeichnet, dass**
die Abdeckungsvorrichtung (2) zumindest zwei in sich steife rahmenartige Elemente (4, 4a, 4b, 4c) umfasst, welche entlang einer Höhenachse Z teleskopartig ineinander verlagerbar sind, wobei zumindest eine Führungsvorrichtung (5) vorgesehen ist, mittels welcher die rahmenartigen Elemente (4, 4a, 4b, 4c) bei einer Verlagerung entlang einer Höhenachse Z geführt werden, wobei zumindest ein elastisches Element (6, 6a, 6b) vorgesehen ist, mittels welchem die Abdeckungsvorrichtung (2) zu einem vorgegebenen Ausgangszustand rückstellbar ist, wobei das elastische Element (6, 6a, 6b) mit zumindest einem rahmenartigen Element (4, 4a, 4b, 4c) verbunden ist.

10. Fahrzeugsitz (1) nach Anspruch 9,
**dadurch gekennzeichnet, dass**
der Sitzunterbau (3) ein Tragegestell (20) umfasst, mittels welchem das Sitzteil (7) mit einem Fußteil (8) und/oder einer Fahrzeugkarosserie (9) verbunden ist, wobei der Sitzunterbau (3) eine Feder- und/oder Dämpfungsvorrichtung (21) für Schwingungen in vertikaler Richtung, wobei der Sitzunterbau (3) eine Feder- und/oder Dämpfungsvorrichtung für Schwingungen in horizontaler Richtung umfasst.

11. Fahrzeugsitz (1) nach einem der Ansprüche 9 bis 10,
**dadurch gekennzeichnet, dass**
die Abdeckungsvorrichtung (2) zumindest drei in sich steife rahmenartige Elemente (4, 4a, 4b, 4c) umfasst, wobei die Abdeckungsvorrichtung (2) drei in sich steife rahmenartige Elemente (4, 4a, 4b, 4c) umfasst, wobei das zumindest eine elastische Element (6, 6a, 6b) mit einem mittleren rahmenartigen Element (4, 4c) verbunden ist, wobei die Abdeckungsvorrichtung (2) ein entlang der Höhenachse Z oberstes (4, 4a) und ein entlang der Höhenachse Z unterstes rahmenartiges Element (4, 4b) umfasst, wobei das oberste rahmenartige Element (4, 4a) an einem Sitzteil (7) angeordnet ist, wobei das unterste rahmenartige Element (4, 4b) an einem Fußteil (8) des Fahrzeugsitzes (1) oder an einer Oberfläche der Fahrzeugkarosserie (9) angeordnet ist.

12. Fahrzeugsitz (1) nach einem der Ansprüche 9 bis 11,
**dadurch gekennzeichnet, dass**
das zumindest eine elastische Element (6, 6a, 6b) zumindest abschnittsweise plattenartig ausgebildet ist, wobei das elastische Element (6, 6a, 6b) an einer Innenseite (12) der rahmenartigen Elemente (4, 4a, 4b, 4c), welche dem Sitzunterbau (3) zugewandt ist, angeordnet ist, wobei die Abdeckungsvorrichtung (2) zumindest zwei elastische Elemente (6, 6a, 6b) aufweist, wobei je zwei elastische Elemente (6, 6a, 6b) an sich gegenüberliegenden Innenseiten (12) der rahmenartigen Elemente (4, 4a, 4b) angeordnet sind.

13. Fahrzeugsitz (1) nach einem der Ansprüche 9 bis 12,
**dadurch gekennzeichnet, dass**
das zumindest eine elastische Element (6, 6a, 6b) eine Ausdehnung entlang der Höhenachse Z aufweist, so dass ein unterer Rand (13b) des zumindest einen elastischen Elements ein Fußteil (8) oder eine Oberfläche der Fahrzeugkarosserie (9) kontaktiert und/oder ein oberer Rand (13a) des elastischen Elements (6, 6a, 6b) das Sitzteil (7) kontaktiert, wobei eine Verformungskraft entlang der Höhenachse Z durch das Sitzteil (7) und/oder das Fußteil (8) des Fahrzeugsitzes (1) beziehungsweise der Oberfläche der Fahrzeugkarosserie (9) in das elastische Element (6, 6a, 6b) einbringbar ist, wobei die Verformungskraft unmittelbar durch einen Kraft- oder Formschluss einbringbar ist.

14. Fahrzeugsitz (1) nach einem der Ansprüche 10 bis 12,
**dadurch gekennzeichnet, dass**
das zumindest eine elastische Element (6, 6a, 6b) mit dem entlang der Höhenachse Z obersten rahmenartigen Element (4, 4a) verbunden ist, wobei das zumindest eine elastische Element (6, 6a, 6b) mit dem entlang der Höhenachse Z untersten rahmenartigen Element (4, 4a) verbunden ist, wobei das zumindest eine elastische Element (6, 6a, 6b) mit dem entlang der Höhenachse Z obersten rahmenartigen Element (4, 4a) und dem entlang der Höhenachse Z untersten rahmenartigen Element (4, 4b) verbunden ist, wobei das zumindest eine elastische Element (6, 6a, 6b) mit dem entlang der Höhenachse Z obersten rahmenartigen Element (4, 4a), dem entlang der Höhenachse Z untersten rahmenartigen Element (4, 4b) verbunden ist und dem mittleren rahmenartigen Element (4,4c) verbunden ist.

15. Fahrzeugsitz (1) nach Anspruch 14,
**dadurch gekennzeichnet, dass**
die Führungsvorrichtung (5) eine Gleitaufnahme (17) in Form einer Nut oder einer Schiene umfasst, welche an einem rahmenartigen Element (4, 4a, 4b, 4c) angeordnet ist, wobei die Führungsvorrichtung (5) ein Führungselement (18) umfasst, welches an einem rahmenartigen Element (4, 4a, 4b, 4c) angeordnet ist, wobei ein Führungselement (18) in oder an der Gleitaufnahme (17) in Form einer Nut oder einer Schiene geführt ist, wobei das Führungselement (18) an einem rahmenartigen Element (4, 4b, 4c) angeordnet ist, welches entlang der Höhenachse Z unter dem rahmenartigen Element (4, 4a, 4b) mit der Gleitaufnahme (17) angeordnet ist.

## Claims

1. Cover device (2) for a seat substructure (3) of a vehicle seat (1), wherein the cover device (2) laterally surrounds the seat substructure (3), wherein the cover device (2) comprises at least two inherently rigid frame-like elements (4, 4a, 4b, 4c),
**characterised in that**
the frame-like elements are telescopically displaceable into each other along an height axis Z, wherein at least one guiding device (5) is provided, by means of which the frame-like elements (4, 4a, 4b, 4c) are guided in a displacement along a height axis Z, wherein at least one elastic element (6, 6a, 6b) is provided, by means of which the cover device (2), can be reset to a predetermined initial state, wherein the elastic element (6, 6a, 6b) is connected to at least one frame-like element (4 4a, 4b, 4c).

2. Cover device (2) according to claim 1,
**characterised in that**
the cover device (2) comprises at least three inherently rigid frame-like elements (4, 4a, 4b, 4c), wherein the cover device (2) comprises three inherently rigid frame like elements (4, 4a, 4b, 4c), wherein the at least one elastic element (6, 6a, 6b) is connected to a middle frame-like element (4, 4c), wherein the cover device (2) comprises a top frame-like element (4, 4a) along the height axis Z and a bottom frame-like element (4, 4b) along the height axis Z (4, 4a), wherein the top frame-like element (4, 4a) can be arranged on a seat part (7), wherein the bottom frame-like element (4, 4b) can be arranged on a foot part (8) of the vehicle seat (1) or on a surface of the vehicle body (9).

3. Cover device (2) according to claim 2,
**characterised in that**
the at least one elastic element (6, 6a, 6b) is arranged on the middle frame-like element (4, 4c) by means of at least one positive and/or frictional connection, wherein the at least one elastic element (6, 6a, 6b) is arranged on the middle frame-like element (4, 4c) by means of a clamping and/or snap-on and/or clip connection, wherein the middle frame-like element (4, 4c) has at least one receptacle (10), in which a connecting element (11) of the at least one elastic element (6, 6a, 6b) is received.

4. Cover device (2) according to any one of the preceding claims,
**characterised in that**
the at least one elastic element (6, 6a, 6b) is at least plate-like in sections, wherein the elastic element (6, 6a, 6b) is arranged on an inner side (12) of the frame-like elements (4, 4a, 4b, 4c), which faces the seat substructure (3), wherein the cover device (2) has at least two elastic elements (6, 6a, 6b), wherein two elastic elements (6, 6a, 6b) each are arranged on opposite inner sides (12) of the frame-like elements (4, 4a, 4b).

5. Cover device () according to one of the preceding claims,
**characterised in that**
the at least one elastic element (6, 6a, 6b) has an extension along the height axis Z, so that a lower edge (13b) of the elastic element contacts a foot part (8) or a surface of the vehicle body (9), and/or an upper edge (13a) of the elastic element (6, 6a, 6b) can contact the seat part (7), wherein a deformation force can be introduced into the elastic element (6, 6a, 6b) along the height axis Z by the seat part (7) and/or the foot part (8) of the vehicle seat (1) or the surface of the vehicle body (9), wherein the deformation force can be introduced directly by friction or positive connection.

6. Cover device (2) according to one of the preceding claims 2 to 4,
**characterised in that**
the at least one elastic element (6, 6a, 6b) is connected to the top frame-like element (4, 4a) along the height axis Z, wherein the at least one elastic element (6, 6a, 6b) is connected to the bottom frame-like element (4, 4a) along the height axis Z, wherein the at least one elastic element (6, 6a, 6b) is connected to the top frame-like element (4, 4a) along the height axis Z and to the bottom frame-like element (4, 4b) along the height axis Z, wherein the at least one elastic element (6, 6a, 6b) is connected to the top frame-like element (4, 4a) along the height axis Z, connected to the bottom frame-like element (4, 4b) along the height axis Z, and connected the middle frame-like element (4, 4c).

7. Cover device (2), according to claim 6,
**characterised in that**
the at least one elastic element (6, 6a, 6b) has a first section (14), which is plate-like, wherein said at least one elastic element (6, 6a, 6b) has a second section (15), which has a Z-shaped cross-section and is arranged along the height axis Z above the first section (14) and merges therewith, wherein the elastic element (6, 6a, 6b) has a third section (16) which has a Z-shaped cross-section and is arranged along the height axis Z below the first section (14) and merges therewith, wherein the at least one elastic element (6, 6a, 6b) is connected by means of the second section (15) to the top frame-like element (4,4a), wherein the at least one elastic element (6, 6a, 6b) is connected by means of the third section (16) to the bottom frame-like element (4, 4b).

8. Cover device (2) according to one of the preceding claims,
**characterised in that**
the guiding device (5) comprises a sliding receptacle (17) in the form of a groove or a rail which is arranged on a frame-like element (4, 4a, 4b, 4c), wherein the guiding device (5) comprises a guiding element (18), which is arranged on a frame-like element (4, 4a, 4b, 4c), wherein a guiding element (18) is guided in or on the slide receptacle (17) in the form of a groove or a rail, wherein the guiding element (18) is arranged on a frame-like element (4, 4b, 4c), which is arranged along the height axis Z under the frame-like element (4, 4a, 4b) with the sliding receptacle (17).

9. Vehicle seat (1) comprising a seat part (7), a backrest (19), and a seat substructure (3) arranged along a height axis Z under the seat part (7), wherein the seat substructure (3) is completely enclosed laterally by a cover device (2),
**characterised in that**
the cover device (2) comprises at least two inherently rigid frame-like elements (4, 4a, 4b, 4c) which are telescopically displaceable along an height axis Z into each other, wherein at least one guiding device (5) is provided, by means of which the frame-like elements (4, 4a, 4b, 4c), are guided in a displacement along a height axis Z, wherein at least one elastic element (6, 6a, 6b) is provided, by means of which the cover device (2) can be reset to a predetermined initial state, wherein the elastic element (6, 6a, 6b) is connected to at least one frame-like element (4, 4a, 4b, 4c).

10. Vehicle seat (1) according to claim 9,
**characterised in that**
the seat substructure (3) comprises a support frame (20), by means of which the seat part (7) is connected to a foot part (8) and/or a vehicle body (9), wherein the seat substructure (3) comprises a spring and/or damping device (21) for vibrations in the vertical direction, wherein the seat substructure (3) comprises a spring and/or damping device for vibrations in the horizontal direction.

11. Vehicle seat (1) according to one of claims 9 to 10,
**characterised in that**
the cover device (2) comprises at least three inherently rigid frame-like elements (4, 4a, 4b, 4c), wherein the cover device (2) comprises three inherently rigid frame-like elements (4, 4a, 4b, 4c), wherein the at least one elastic element (6, 6a, 6b) is connected to a middle frame-like element (4, 4c), wherein the cover device (2) comprises a top frame-like element (4, 4a) along the height axis Z and a bottom frame-like element (4, 4b) along the height axis Z, wherein the top frame-like element (4, 4a) is arranged on a seat part (7), wherein the bottom frame-like element (4, 4b) is arranged on a foot part (8) of the vehicle seat (1) or on a surface of the vehicle body (9).

12. Vehicle seat (1) according to one of claims 9 to 11,
**characterised in that**
the at least one elastic element (6, 6a, 6b) is at least plate-like in sections, wherein the elastic element (6, 6a, 6b) is arranged on an inner side (12) of the frame-like elements (4, 4a, 4b, 4c) which faces the seat substructure (3), wherein the cover device (2) has at least two elastic elements (6, 6a, 6b), wherein two elastic elements (6, 6a, 6b) each are arranged on opposite inner sides (12) of the frame-like elements (4, 4a, 4b).

13. Vehicle seat (1) according to one of claims 9 to 12,
**characterised in that**
the at least one elastic element (6, 6a, 6b) has an extension along the height axis Z, so that a lower edge (13b) of the at least one elastic element contacts a foot part (8) or a surface of the vehicle body (9), and/or an upper edge (13a) of the elastic element (6, 6a, 6b) contacts the seat part (7), wherein a deformation force can be introduced into the elastic element (6, 6a, 6b) along the height axis Z by the seat part (7) and/or the foot part (8) of the vehicle seat (1) or the surface of the vehicle body (9), wherein the deformation force can be introduced directly by friction or positive connection.

14. Vehicle seat (1) according to any one of claims 10 to 12,
**characterised in that**
the at least one elastic element (6, 6a, 6b) is connected to the top frame-like element (4, 4a) along the height axis Z, wherein the at least one elastic element (6, 6a, 6b) is connected to the bottom frame-like element (4, 4b) along the height axis Z, wherein the at least one elastic element (6, 6a, 6b) is connected to the top frame-like element (4, 4a) along the height axis Z and to the bottom frame-like element (4, 4b) along the height axis Z, wherein the at least one elastic element (6, 6a, 6b) is connected to the top frame-like element (4, 4a) along the height axis Z, connected to the bottom frame-like element (4, 4b) along the height axis Z, and connected to the middle frame-like element (4, 4c).

15. Vehicle seat (1) according to claim 14,
**characterised in that**
the guiding device (5) comprises a sliding receptacle (17) in the form of a groove or a rail, which is arranged on a frame-like element (4, 4a, 4b, 4c), wherein the guiding device (5) comprises a guiding element (18) which is arranged on a frame-like element (4, 4a, 4b, 4c), wherein a guiding element (18) is guided in or on the sliding receptacle (17) in the form of a groove or a rail, wherein the guiding element (18) is arranged on a frame-like element (4, 4b, 4c), which is arranged along the height axis Z under the frame-like element (4, 4a, 4b) with the sliding receptacle (17).

## Revendications

1. Dispositif de recouvrement (2) pour une sous-structure de siège (3) d'un siège de véhicule (1), le dispositif de recouvrement (2) entourant latéralement la sous-structure de siège (3), le dispositif de recouvrement (2) comportant au moins deux éléments en forme de cadre (4, 4a, 4b, 4c) rigides en soi,
**caractérisé par le fait que**
les éléments en forme de cadre sont déplaçables l'un dans l'autre de façon télescopique le long d'un axe dans le sens de la hauteur Z, au moins un dispositif de guidage (5) étant prévu, au moyen duquel les éléments en forme de cadre (4, 4a, 4b, 4c) sont guidés le long d'un axe dans le sens de la hauteur Z lors d'un déplacement, au moins un élément élastique (6, 6a, 6b) étant prévu, au moyen duquel le dispositif de recouvrement (2) est apte à être rappelé à un état initial prédéterminé, l'élément élastique (6, 6a, 6b) étant relié à au moins un élément en forme de cadre (4, 4a, 4b, 4c).

2. Dispositif de recouvrement (2) selon la revendication 1,
**caractérisé par le fait que**
le dispositif de recouvrement (2) comporte au moins trois éléments en forme de cadre (4, 4a, 4b, 4c) rigides en soi, le dispositif de recouvrement (2) comportant trois éléments en forme de cadre (4, 4a, 4b, 4c) rigides en soi, ledit au moins un élément élastique (6, 6a, 6b) étant relié à un élément en forme de cadre médian (4, 4c), le dispositif de recouvrement (2) comportant un élément en forme de cadre supérieur (4, 4a) le long de l'axe dans le sens de la hauteur Z et un élément en forme de cadre inférieur (4, 4b) le long de l'axe dans le sens de la hauteur Z, l'élément en forme de cadre supérieur (4, 4a) étant apte à être disposé sur une partie assise (7), l'élément en forme de cadre inférieur (4, 4b) étant apte à être disposé sur une partie de pied (8) du siège de véhicule (1) ou sur une surface de la carrosserie de véhicule (9).

3. Dispositif de recouvrement (2) selon la revendication 2,
**caractérisé par le fait que**
ledit au moins un élément élastique (6, 6a, 6b) est disposé sur l'élément en forme de cadre médian (4, 4c) au moyen d'au moins une liaison par complémentarité de formes et/ou à force, ledit au moins un élément élastique (6, 6a, 6b) étant disposé sur l'élément en forme de cadre médian (4, 4c) au moyen d'une liaison par serrage et/ou à encliquetage et/ou par agrafage, l'élément en forme de cadre médian (4, 4c) présentant au moins un logement (10) dans lequel un élément de liaison (11) dudit au moins un élément élastique (6, 6a, 6b) est reçu.

4. Dispositif de recouvrement (2) selon l'une des revendications précédentes,
**caractérisé par le fait que**
ledit au moins un élément élastique (6, 6a, 6b) est formé au moins par sections sous forme de plaque, l'élément élastique (6, 6a, 6b) étant disposé sur un côté interne (12) des éléments en forme de cadre (4, 4a, 4b, 4c), lequel est tourné vers la sous-structure de siège (3), le dispositif de recouvrement (2) présentant au moins deux éléments élastiques (6, 6a, 6b), à chaque fois deux éléments élastiques (6, 6a, 6b) étant disposés sur des côtés internes se faisant face (12) des éléments en forme de cadre (4, 4a, 4b).

5. Dispositif de recouvrement (2) selon l'une des revendications précédentes,
**caractérisé par le fait que**
ledit au moins un élément élastique (6, 6a, 6b) présente une étendue le long de l'axe dans le sens de la hauteur Z, de telle sorte qu'un bord inférieur (13b) de l'élément élastique peut venir en contact avec une partie de pied (8) ou une surface de la carrosserie de véhicule (9) et/ou un bord supérieur (13) de l'élément élastique (6, 6a, 6b) peut venir en contact avec la partie assise (7), une force de déformation étant apte à être introduite dans l'élément élastique (6, 6a, 6b) le long de l'axe dans le sens de la hauteur Z par la partie assise (7) et/ou la partie de pied (8) du siège de véhicule (1), respectivement la surface de la carrosserie de véhicule (9), la force de déformation étant apte à être introduite directement par liaison par force ou par complémentarité de formes.

6. Dispositif de recouvrement (2) selon l'une des revendications précédentes 2 à 4,
**caractérisé par le fait que**
ledit au moins un élément élastique (6, 6a, 6b) est relié à l'élément en forme de cadre supérieur (4, 4a) le long de l'axe dans le sens de la hauteur Z, ledit au moins un élément élastique (6, 6a, 6b) étant relié à l'élément en forme de cadre inférieur (4, 4a) le long de l'axe dans le sens de la hauteur Z, ledit au moins un élément élastique (6, 6a, 6b) étant relié à l'élément en forme de cadre supérieur (4, 4a) le long de l'axe dans le sens de la hauteur Z et à l'élément en forme de cadre inférieur (4, 4b) le long de l'axe dans le sens de la hauteur Z, ledit au moins un élément élastique (6, 6a, 6b) étant relié à l'élément en forme de cadre supérieur (4, 4a) le long de l'axe dans le sens de la hauteur Z, à l'élément en forme de cadre inférieur (4, 4b) le long de l'axe dans le sens de la hauteur Z, et étant relié à l'élément en forme de cadre médian (4, 4c).

7. Dispositif de recouvrement (2) selon la revendication 6,
**caractérisé par le fait que**
ledit au moins un élément élastique (6, 6a, 6b) présente une première section (14), qui est réalisée en forme de plaque, ledit au moins un élément élastique (6, 6a, 6b) présentant une deuxième section (15), laquelle présente une section transversale en forme de Z et est disposée au-dessus de la première section (14) le long de l'axe dans le sens de la hauteur Z et se raccorde à celle-ci, l'élément élastique (6, 6a, 6b) présentant une troisième section (16), laquelle présente une section transversale en forme de Z et est disposée au-dessous de la première section (14) le long de l'axe dans le sens de la hauteur Z et se raccorde à celle-ci, ledit au moins un élément élastique (6, 6a, 6b) étant relié à l'élément en forme de cadre supérieur (4, 4a) au moyen de la deuxième section (15), ledit au moins un élément élastique (6, 6a, 6b) étant relié à l'élément en forme de cadre inférieur (4, 4b) au moyen de la troisième section (16).

8. Dispositif de recouvrement (2) selon l'une des revendications précédentes,
**caractérisé par le fait que**
le dispositif de guidage (5) comporte un logement de glissement (17) sous la forme d'une rainure ou d'un rail, lequel est disposé sur un élément en forme de cadre (4, 4a, 4b, 4c), le dispositif de guidage (5) comportant un élément de guidage (18), lequel est disposé sur un élément en forme de cadre (4, 4a, 4b, 4c), un élément de guidage (18) étant guidé dans ou sur le logement de glissement (17) sous la forme d'une rainure ou d'un rail, l'élément de guidage (18) étant disposé sur un élément en forme de cadre (4, 4b, 4c), lequel est disposé avec le logement de glissement (17) au-dessous de l'élément en forme de cadre (4, 4a, 4b) le long de l'axe dans le sens de la hauteur Z.

9. Siège de véhicule (1), comportant une partie assise (7), un dossier (18) et une sous-structure de siège (3), laquelle est disposée au-dessous de la partie assise (7) le long d'un axe dans le sens de la hauteur Z, la sous-structure de siège (3) étant entourée entièrement latéralement par un dispositif de recouvrement (2),
**caractérisé par le fait que**
le dispositif de recouvrement (2) comporte au moins deux éléments en forme de cadre (4, 4a, 4b, 4c) rigides en soi, lesquels sont déplaçables l'un dans l'autre de façon télescopique le long d'un axe dans le sens de la hauteur Z, au moins un dispositif de guidage (5) étant prévu, au moyen duquel les éléments en forme de cadre (4, 4a, 4b, 4c) sont guidés le long d'un axe dans le sens de la hauteur Z lors d'un déplacement, au moins un élément élastique (6, 6a, 6b) étant prévu, au moyen duquel le dispositif de recouvrement (2) est apte à être rappelé à un état initial prédéterminé, l'élément élastique (6, 6a, 6b) étant relié à au moins un élément en forme de cadre (4, 4a, 4b, 4c).

10. Siège de véhicule (1) selon la revendication 9,
**caractérisé par le fait que**
la sous-structure de siège (3) comporte un châssis de support (20) au moyen duquel la partie assise (7) est reliée à une partie de pied (8) et/ou à une carrosserie de véhicule (9), la sous-structure de siège (3) comportant un dispositif formant ressort et/ou d'amortissement (21) pour des vibrations dans la direction verticale, la sous-structure de siège (3) comportant un dispositif formant ressort et/ou d'amortissement pour des vibrations dans la direction horizontale.

11. Siège de véhicule (1) selon l'une des revendications 9 à 10,
**caractérisé par le fait que**
le dispositif de recouvrement (2) comporte au moins trois éléments en forme de cadre (4, 4a, 4b, 4c) rigides en soi, le dispositif de recouvrement (2) comportant trois éléments en forme de cadre (4, 4a, 4b, 4c) rigides en soi, ledit au moins un élément élastique (6, 6a, 6b) étant relié à un élément en forme de cadre médian (4, 4c), le dispositif de recouvrement (2) comportant un élément en forme de cadre supérieur (4, 4a) le long de l'axe dans le sens de la hauteur Z et un élément en forme de cadre inférieur (4, 4b) le long de l'axe dans le sens de la hauteur Z, l'élément en forme de cadre supérieur (4, 4a) étant disposé sur une partie assise (7), l'élément en forme de cadre inférieur (4, 4b) étant disposé sur une partie de pied (8) du siège de véhicule (1) ou sur une surface de la carrosserie de véhicule (9).

12. Siège de véhicule (1) selon l'une des revendications 9 à 11,
**caractérisé par le fait que**
ledit au moins un élément élastique (6, 6a, 6b) est formé au moins par sections sous forme de plaque, l'élément élastique (6, 6a, 6b) étant disposé sur un côté interne (12) des éléments en forme de cadre (4, 4a, 4b, 4c), lequel est tourné vers la sous-structure de siège (3), le dispositif de recouvrement (2) présentant au moins deux éléments élastiques (6, 6a, 6b), à chaque fois deux éléments élastiques (6, 6a, 6b) étant disposés sur des côtés internes se faisant face (12) des éléments en forme de cadre (4, 4a, 4b).

13. Siège de véhicule (1) selon l'une des revendications 9 à 12,
**caractérisé par le fait que**
ledit au moins un élément élastique (6, 6a, 6b) présente une étendue le long de l'axe dans le sens de la hauteur Z, de telle sorte qu'un bord inférieur (13b) dudit au moins un élément élastique vient en contact avec une partie de pied (8) ou une surface de la carrosserie de véhicule (9) et/ou un bord supérieur (13a) de l'élément élastique (6, 6a, 6b) vient en contact avec la partie assise (7), une force de déformation pouvant être introduite dans l'élément élastique (6, 6a, 6b) le long de l'axe dans le sens de la hauteur Z par la partie assise (7) et/ou la partie de pied (8) du siège de véhicule (1), respectivement la surface de la carrosserie de véhicule (9), la force de déformation pouvant être introduite directement par liaison par force ou par complémentarité de formes.

14. Siège de véhicule (1) selon l'une des revendications 10 à 12,
**caractérisé par le fait que**
ledit au moins un élément élastique (6, 6a, 6b) est relié à l'élément en forme de cadre supérieur (4, 4a) le long de l'axe dans le sens de la hauteur Z, ledit au moins un élément élastique (6, 6a, 6b) étant relié à l'élément en forme de cadre inférieur (4, 4a) le long de l'axe dans le sens de la hauteur Z, ledit au moins un élément élastique (6, 6a, 6b) étant relié à l'élément en forme de cadre supérieur (4, 4a) le long de l'axe dans le sens de la hauteur Z et à l'élément en forme de cadre inférieur (4, 4b) le long de l'axe dans le sens de la hauteur Z, ledit au moins un élément élastique (6, 6a, 6b) étant relié à l'élément en forme de cadre supérieur (4, 4a) le long de l'axe dans le sens de la hauteur Z, à l'élément en forme de cadre inférieur (4, 4b) le long de l'axe dans le sens de la hauteur Z et étant relié à l'élément en forme de cadre médian (4, 4c).

15. Siège de véhicule (1) selon la revendication 14,
**caractérisé par le fait que**
le dispositif de guidage (5) comporte un logement de glissement (17) sous la forme d'une rainure ou d'un rail, lequel est disposé sur un élément en forme de cadre (4, 4a, 4b, 4c), le dispositif de guidage (5) comportant un élément de guidage (18), lequel est disposé sur un élément en forme de cadre (4, 4a, 4b, 4c), un élément de guidage (18) étant guidé dans ou sur le logement de glissement (17) sous la forme d'une rainure ou d'un rail, l'élément de guidage (18) étant disposé sur un élément en forme de cadre (4, 4b, 4c), lequel est disposé avec le logement de glissement (17) au-dessous de l'élément en forme de cadre (4, 4a, 4b) le long de l'axe dans le sens de la hauteur Z.
